**Europäisches Patentamt**

**European Patent Office**

**Office européen des brevets**

(11) Publication number: **0 206 601**
A1

# EUROPEAN PATENT APPLICATION

(21) Application number: **86304334.5**

(22) Date of filing: **06.06.86**

(51) Int. Cl.⁴: **G 09 B 23/10, A 63 H 27/04**

(30) Priority: **10.06.85 US 743156**

(43) Date of publication of application: **30.12.86**
**Bulletin 86/52**

(84) Designated Contracting States: **AT DE FR GB IT**

(71) Applicant: **SLIDEX CORPORATION, No. 15, 2-Chome, Senkawa-Machi Toshima-Ku, Tokyo (JP)**

(72) Inventor: **Ozeki, Jiro, No. 15, 2-Chome Senkawa-Cho, Toshima-Ku Tokyo (JP)**

(74) Representative: **Wotherspoon, Graham et al, FITZPATRICKS 4 West Regent Street, Glasgow G2 1RS Scotland (GB)**

(54) **Propulsion apparatus for displaying a model.**

(57) The present invention includes a propulsion apparatus for displaying a model. A hanging line is connected at one end to the model and at the other end to the propulsion apparatus. By the propulsion of powerless models through a circular path under an external power source, the characteristics of the model are tested. The apparatus is useful for observing the flight stability of a model of a flying object and balance of a model of a ground travelling object as a way of displaying the model.

0206601

US 743,156

PROPULSION APPARATUS FOR DISPLAYING A MODEL

Synthetic resin models of flying objects such as military airplanes, passenger airplanes, transport airplanes, helicopters, spaceships, flying animals, such as birds and fish and the like are known. These models are provided in kit form on a scale proportional to actual size flying objects. Aeromaniacs, ranging from children to grownups, love to assemble and manufacture all kinds of models of flying objects.

Some models of planes resemble an actual plane in their dimensions and require a high degree of precision for assembly. They do not, however, include a source of power for flying. Therefore, there is no way to demonstrate the use of the finished model in a flying condition. The hobby of model building is thereby limited to exclude the flying of the model when a hobby enthusiast finishes the model. For this reason, the only function of a powerless model of a flying object, after assembly, is for the visual pleasure of its assembler, be it on a desk or suspended from the ceiling.

Other models of flying objects include an internal source of power such as a tightly wound rubber band or a gasoline powered engine for U-control planes or radio controlled (RC) planes. To test the flying

- 2 -                    0206601

ability of these models, the hobbyist must make a test flight and suffer disastrous consequences if the model should crash land due to an unstable flight.

The present invention advantageously solves a problem associated with models of flying objects by providing a device for displaying a model of a flying object in a flying condition. By the use of an external power source, the present invention displays a powerless model of a flying object in a flying condition and is also used to test fly a model of a flying object which includes a power source not yet rendered operational.

Some models are of vehicles which are suitable for traveling on the ground including automobiles, motorcycles, military tanks, sail boats, tug boats, patrol boats, and aircraft carriers. These models are provided in kit form, usually on a scale proportional to the dimensions of the actual vehicles they are models of.

These models usually do not, however, include a source of power to drive the model. Therefore, there is no way to demonstrate the use of the finished model in an operative condition.

Some ground travelling models include a battery driven motor or wound spring driven motor. However, these models generally travel in a straight line and are obstructed against further travel by walls, furniture and other road blocks.

The present invention includes a propulsion

0206601

apparatus for displaying a model of a flying object including toy in a flying condition. A flexible hanging line is coupled at one end to a model of a flying object and is coupled at the other end to a propulsion apparatus having a motor for rotating a shaft to which the model of a flying object is connected.

In an alternate embodiment, two or four hanging lines suspend the flying object from the propulsion apparatus. If the flying object includes wings, a third or fifth line may be added to the two or four hanging lines, respectively, the third or fifth line being connected at one end to the tip of the wing closest to the propulsion apparatus and at the other end connected to the propulsion apparatus. The third or fifth hanging line limits the extent of the angle of displacement of the wing when the model is in a flying condition.

The flexible hanging line, of a predetermined length, approximately two times the length of the model to which it is connected, is coupled to the model of the flying object. The hanging line receives external force from an arm-shaped or disc-shaped rotating body driven by a motor. The model of the flying object is circularly moved at a certain revolving radius which is changed according to the desired flight path of the model. The motor causes the model of the flying object to fly in the direction of least air resistance. That is, the model flies due to the external force

- 4 -  0206601

applied by the motor through the rotary body and a flexible hanging line.  The model receives lift, thrust and resistance inherent to the shape, structure and the like of the model.

In a model of a flying object having aerodynamic properties such as an airplane or a jet, the flow of air along the lower surface of the wing arrives at the trailing edge of the wing before the flow of air along the upper surface.  The lower surface flow attempts to expand around the trailing edge.  As a result of this, a vortex is formed.  The rotation of the flying object accelerates the upper surface flow, so that the length of time required for a particle of air to move from the leading edge to the trailing edge becomes the same for the upper and the lower surface flow.  Increased velocity of the upper surface flow eliminates the formation of a vortex by the lower surface air at the trailing edge, and produces a lower pressure at each point on the upper surface than exists at the corresponding points on the lower surface.  The difference in pressures produces a lift on the model.

The flying orientation of the model object is obtained, as in a real flying object, by the location of the wings on the fuselage.  The lesser wind resistance of the fuselage ahead of the wings compared to the wind resistance of the portion of the fuselage behind the wings orients the front of the model object to fly into the wind.  As the front of the fuselage is directed in the direction of rotation or into the wind, the air forces act on the air foil wings to lift the model of the flying object into a condition of flying. The orienting of the model due to its aerodynamic properties produces a stable flight, without wobble.

Therefore, the propulsion mechanism of the present invention provides an apparatus for testing the aerodynamic properties of a model having an aerodynamic design. The hobbyist not only obtains the pleasure of assembling a scale model of an actual aircraft, but is also enabled by the present invention to see the model actually fly when subjected to a circular rotation at a speed of approximately 20 rpm. The flight of the model is based on the same principles which cause full-size aircraft to fly.

The lift on the model caused by its airfoil design elevates the model to a position above the point at which it would be centrifugally located without an aerodynamic design. With respect to models of flying objects lacking an airfoil to cause its elevation by air flow, the centrifugal forces exerted on the model by the propulsion apparatus gives the appearance of flight.

Another use of the present invention, is for testing models which include internal power such as rubber band powered models, gasoline engine U-control models, and gasoline engine radio-controlled models. By attachment of these models to the hanging lines which are attached to the propulsion mechanism of the present invention, an external power causes these models to be elevated above their centrifugal trajectory. This enables the hobbyist to test the stability and aerodynamic properties of an internally powered model by the use of an external force. This is beneficial to those hobbyists who design models for rubber band, gasoline engine U-controlled and gasoline engine radio-controlled flight.

Therefore, the propulsion mechanism of the present invention provides an apparatus for testing the aerodynamic properties of a model of a flying object through the use of an external power source to cause the model to fly. This adds another phase to the hobby of model building and provides a test apparatus for flying models which usually operate under their own internal power source.

The present invention advantageously solves the problems associated with ground travelling models by providing a device for displaying a model in an operative condition. By the use of an external propulsion drive source, the present invention is used to display in an operative condition, a ground travelling model.

The present invention includes a propulsion apparatus having a flexible hanging line coupled at one end to a ground travelling model including toy. The hanging line is coupled at its other end to a propulsion device which includes a motor for rotating a shaft to which the model is connected by the hanging line.

The flexible hanging line, to which the model is connected receives an external driving force from an arm extension of·a rotating shaft which is driven by a motor. The model is moved in a circle at a radius which is changeable according to the desired path of travel of the model. The centrifugal force acting on the model, as restricted by the connection of the model to the flexible hanging line, causes the model to be pulled in a circular path at a distance from an arm of the drive mechanism.

The drive mechanism of the present invention provides for the testing of the aerodynamic properties and blance of the model as the model travels across a floor. Further, in models such as two wheeled motorcycles, an angle of indication and visual appearance of the model as the model travels across the floor, is tested. The drive mechanism of the present invention rotates at approximately 50 to 15 rpm, preferably approximately 10 rpm to cause the model to be driven at similar speeds.

Another use of the present invention, is to test models which include their own internal power system, such as a battery or gas operated motor for a radio controlled motorcycle, car, boat or ship. By attachment of a radio controlled model to the hanging line of an external propulsion mechanism, these models are thereby tested in a controlled environment.  A flat testing surface is used rather than having a test run made for the radio controlled model where an error in the control or stability of the model can cause an accident.

Therefore, an external propulsion mechanism provides a test of the properties of a model through the use of an external power source.  This adds another phase to the hobby of model building and provides a testing apparatus to test models which usually operate under their own internal power source, as well as models which do not include an internal power source.

The invention will be explained with reference to the embodiments illustrated in Figures 1 through 41 as follows:

Figure 1 illustrates an embodiment of the present invention where a helicopter, a jet plane and a propeller plane are suspended from a rotating body mounted on a ceiling.

Figure 2 illustrates a model of a propeller plane attachable to the hanging lines shown in Figure 1.

Figure 3 is a perspective view of an alternate embodiment of the present invention showing a propulsion mechanism to be mounted on the floor or a desk top.

Figure 4 illustrates an alternate embodiment of the rotary arm shown in Figure 3.

Figure 5 illustrates a propulsion mechanism for propelling a model of a flying object through the air.

0206601

Figure 6 illustrates different positions of the rotary arms of the propulsion mechanism shown in Figure 5.

Figure 7 illustrates a more detailed view of the propulsion mechanism shown in Figures 5 and 6.

Figure 8 illustrates one side of the central portion of one rotary arm of the propulsion mechanism shown in Figures 5 and 6.

Figure 9 illustrates the opposite side of the central portion of the rotary arm shown in Figure 8.

Figure 10 illustrates an alternate embodiment of a rotary arm to be driven by a propulsion mechanism.

Figure 11 is an end view of the fixed segment of the rotary arm shown in Figure 10.

Figure 12 is an end view of the movable segment of the arm shown in Figure 10.

Figure 13 illustrates the threading of a coupling for securing a model of a flying object at one end of a hanging wire.

Figure 14 illustrates a detailed view of the couplings used to secure the model of the flying object to the hanging wire shown in Figure 13.

Figure 15 illustrates the coupling shown in Figures 13 and 14 secured to the model of the flying object.

Figure 16 illustrates an alternate embodiment of a propulsion mechanism for propelling a model of a flying object which is attached to a hanging wire attached to an endless belt.

Figure 17 discloses a propulsion mechanism having variable length hanging wires.

Figure 18 illustrates the mounting of the hanging wire over a pulley shown in Figure 17.

Figure 19 illustrates a model of a flying object having a non-aerodynamic design.

Figure 20 illustrates a model of a flying object suspended by two lines, and in an alternate embodiment by four lines, from a clip-on attachment which is attachable to the propulsion mechanism shown in Figure 6.

Figure 21 illustrates an exploded view of a forward mounted propeller assembly for a model of a flying object.

Figure 22 illustrates an assembled view of the propeller assembly shown in Figure 21.

Figure 23 illustrates a cross-sectional exploded view of a rear mounted, pusher-type propeller assembly.

Figure 24 illustrates an alternate embodiment from Figure 23 of a cross-sectional exploded view of a rear mounted, pusher-type propeller assembly.

Figure 25 illustrates a perspective view of a model of a bird.

Figure 25A illustrates a connection part between wings and body section of a model of a bird shown in Figure 25.

Figure 25B illustrates a plan view of a model of a bird shown in Figure 25.

Figure 26 illustrates a front view of a model of a bird.

Figure 26A illustrates a front view of a model of a bird with wings forced upward.

Figure 26B illustrates alternate embodiment of a model of a bird shown in Figure 25.

Figure 27 illustrates a side view of a model of a bird.

Figure 27A illustrates a perspective view of other model of a bird.

Figure 27B illustrates a front view of a model shown in Figure 27A.

Figure 27C illustrates a perspective view of a model which is applicable to the propulsion apparatus shown in Figure 17.

Figure 28 is a plan view of a model of an automobile being driven by an external driving force.

Figure 29 is a plan view of a model of a motorcycle being driven by an external driving force.

Figure 30 is a side view of the motorcycle being driven by an external driving force, as shown in Figure 29.

Figure 31 illustrates two motorcycles being driven by an external driving force.

Figure 32 is a perspective view of a model of a patrol boat and a model of a car towing a speed boat, as driven by an external power source.

Figure 33 is a perspective view of a model of a sailboat and a model of an aircraft carrier being driven by an external power source.

Figure 34 is a perspective view of a model of a military tank being driven by an external power source.

Figure 35 is a side view of a model of a motorcycle anchored to a flexible hanging line.

Figure 36 is a perspective view of a model of an aircraft carrier.

Figure 37 is an enlarged view of a wheel of the aircraft carrier shown in Figure 36.

Figure 38 is a perspective view of a model of a tug boat.

Figure 39 is a perspective view of a model of a sail boat.

Figure 40 is an end view illustrating the runners of the sail boat shown in Figure 39.

Figure 41 illustrates a perspective view of an alternate embodiment of the present invention showing a propulsion mechanism with a stand.

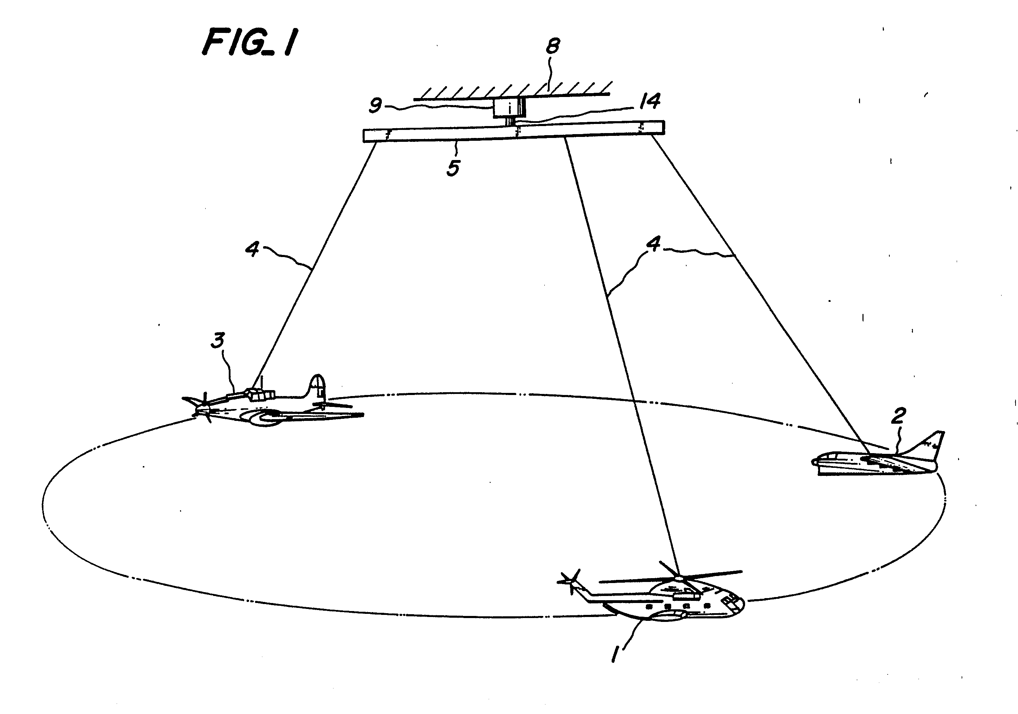

In Figure 1, flying models 1, 2 and 3 are coupled to one end of a flexible hanging line 4. Line 4 is a high strength, preferably transparent thin line made of fishing line, thin wire, string or other suitable material. The other end of each flexible hanging line 4 is coupled to the edge portion of

- 13 -                    0206601

a rotary body 5 at predetermined intervals.  Body 5 is
disc-shaped.

The flexible hanging line 4 is preferably as
thin and transparent as possible to avoid attracting
attention to the·lines from which the flying models 1,
2 and 3 hang.  The flexible hanging line 4 also includes
a twist return located as unobtrusively as possible for
removing the twist of the hanging wire during rotation
of the body 5.

In the embodiment shown in Figure 1, the
rotary body 5 is fixed to an output shaft 14 of a
motor 9, secured to a ceiling 8, so as to enable rotation
and driving of the rotary body 5 by the motor 9.
The motor 9 is an electric motor, preferably of the
type that can be changed in rotary speed, if necessary,
and can continue rotation of the output shaft 14 by
inertia (free-wheeling), when the power supply has
stopped.

The coupling of the flexible hanging line 4
to the aerodynamic design flying models 1, 2 and 3 is
located on the top of the model, slightly off to one
side from the center of lift of each model, towards the
side of the model which is closest to the centrally
located propulsion mechanism (radially inwardly).
The connection point of the hanging line and the model,
located slightly off to one side from the center of
lift, maintains the substantially horizontal orientation
of the model during flight.  The center of lift is usually located ahead of the center of gravity. This will vary according to the type and weighting of each model.

According to the type of model being flown, weight is added to the model until the center of gravity is at the approximate connection point of the model. The center of lift, which does not change by the adding of weight to the model, is located adjacent to the center of gravity when the model is balanced to lie horizontal when suspended from a line attached to the center of gravity. The hanging line is anchored to the model within an area of approximately 1/4 inch by 1/4 inch for smaller models, and 1 inch by 1 inch for larger models with the center of lift being in the center of this area.

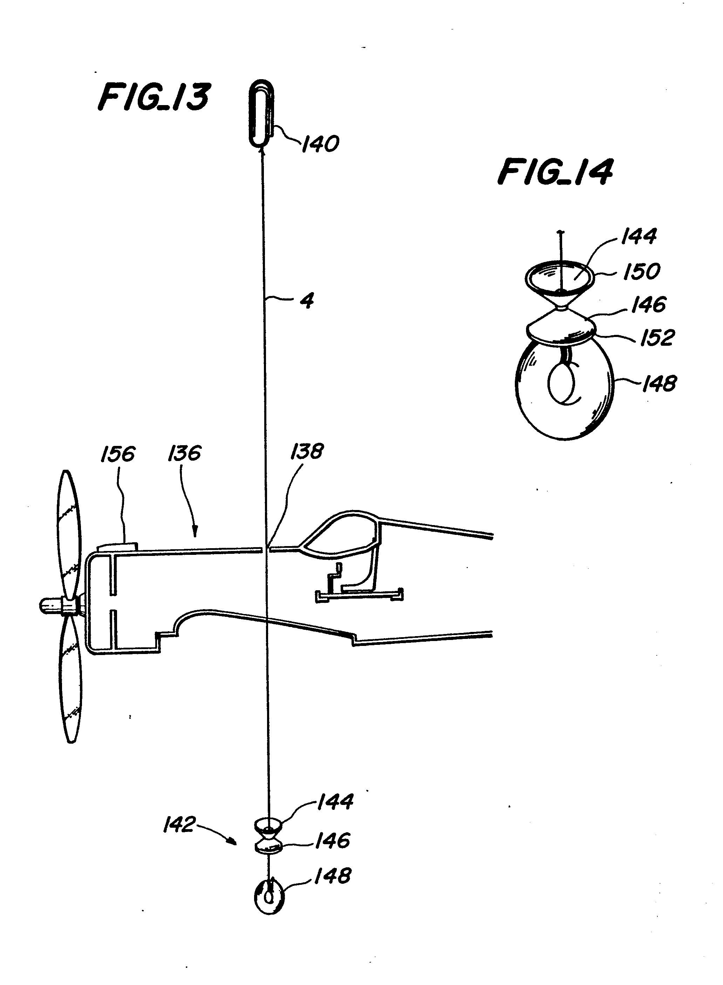

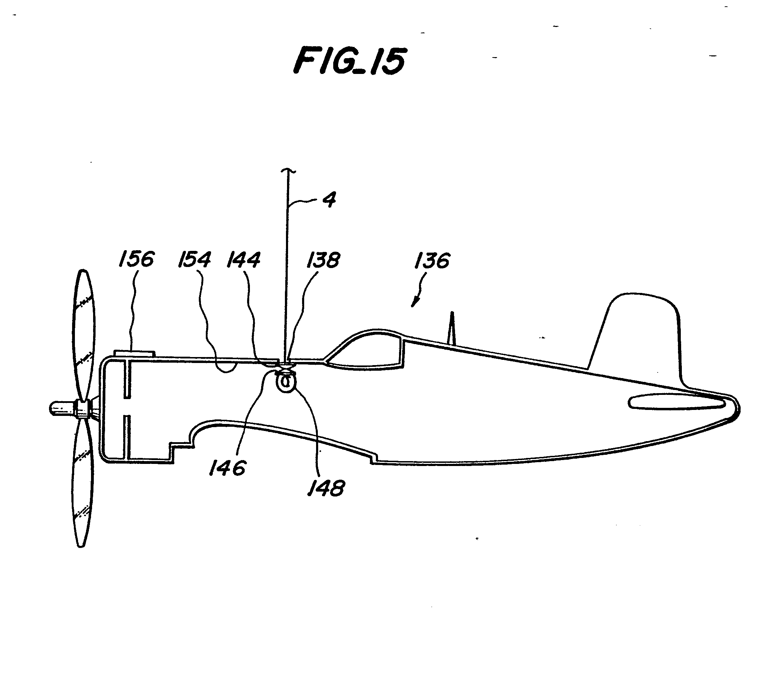

If the models 1, 2 and 3 incline up or down with respect to the horizontal when the models 1, 2 and 3 are coupled to the hanging line 4, a weight as shown in Figures 13 and 15, is secured to lighter portions of the flying models 1, 2 and 3 to place the models in a slightly inclined flying position. Consequently, the models 1, 2 and 3, coupled by the flexible hanging lines 4 to the propulsion mechanism, are maintained in a flying condition during rotation of the rotary body due to the lift caused by the aerodynamic design of the models, as explained previously.

The center of lift and the center of gravity have a positional relation on substantially the same axis.

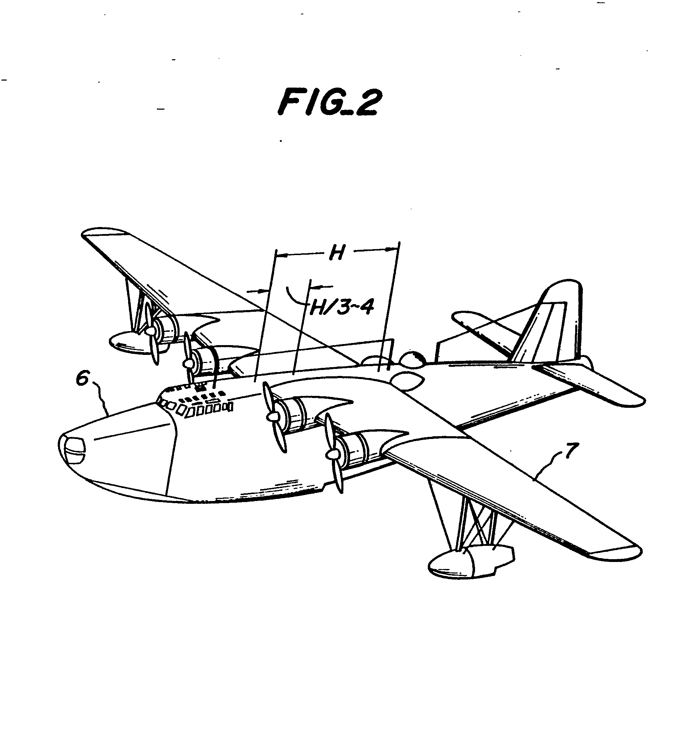

The center of lift is at the center position of a main rotor for the helicopter shown as flying model 1. In models 2 and 3, the center of lift is generally located at a point on the axis of the fuselage 7, at a distance from the leading edge of main wing 7 approximately equal to 1/4 to 1/3 the width of the main wing 7. The center of gravity in models 2 and 3 is usually located behind the leading edge of the main wing at a point 1/3 of the width of the main wing. In Figure 2, H represents the width of the main wing 7 with H/3-4 representing a distance extending across approximately 1/3 to 1/4 of the width of the main wing 7.

In other types of models, the center of lift is located at different points, not necessarily over the wingspan. This is particularly true with models having canard wings, delta-type wing, swept forward wings or swept rearward wings.

According to the apparatus in Figure 1, the flying models 1, 2 and 3 are coupled to one end of flexible hanging line 4 by means of a coupling assembly shown in Figures 13 through 15. The motor 9 is thereafter rotated at a speed in the range of 20 rpm. Each flying model 1, 2 or 3 receives a cenrifugal force through the flexible hanging line 4, in proportion to the motor speed and distance from the center of rotation to move the models in a circular direction through the imaginary line shown in Figure 1. Each model gradually takes off into a flying condition during rotation.

The time required, from the start of rotation of the motor 9 to the model being in the flying condition for each flying model 1, 2 or 3, depends on the type of model and the speed of rotation of the motor. In general, the flying condition is achieved quicker by using a motor 9 having a higher rotary speed. After each flying model 1, 2 or 3 is in its flying condition, even if the motor rotary speed is considerably slowed down, the flying condition is maintained by each model.

In the flying condition of the models shown in Figure 1, the centrifugal force acting on each model and the air current around the wings, rudder and the like can be observed for study and the hobbyist can enjoy the pleasure of flying a mode which was assembled by hand. If the flexible hanging line 4 is very thin and transparent, the flying condition of a model is observed without the appearance of the model being anchored to the propulsion mechanism. The hanging line may be fish line or thin wire.

The models 1, 2 and 3, after operating in the flying mode, are brought to a standstill condition by stopping rotation of the motor 9. A motor, whose brake is actuated simultaneously with the stopping of the rotation of the motor 9 would entangle the flexible hanging lines 4 by the force of inertia causing each of the models 1, 2 or 3 to continue rotating and become entwined. It is therefore preferable to select a motor where the flying models 1, 2 and 3 inertially spin and gradually stop at the same time by the free-spinning of the motor after power has been cut off. The mass of the models frictionally reduce the spin of the motor shaft.

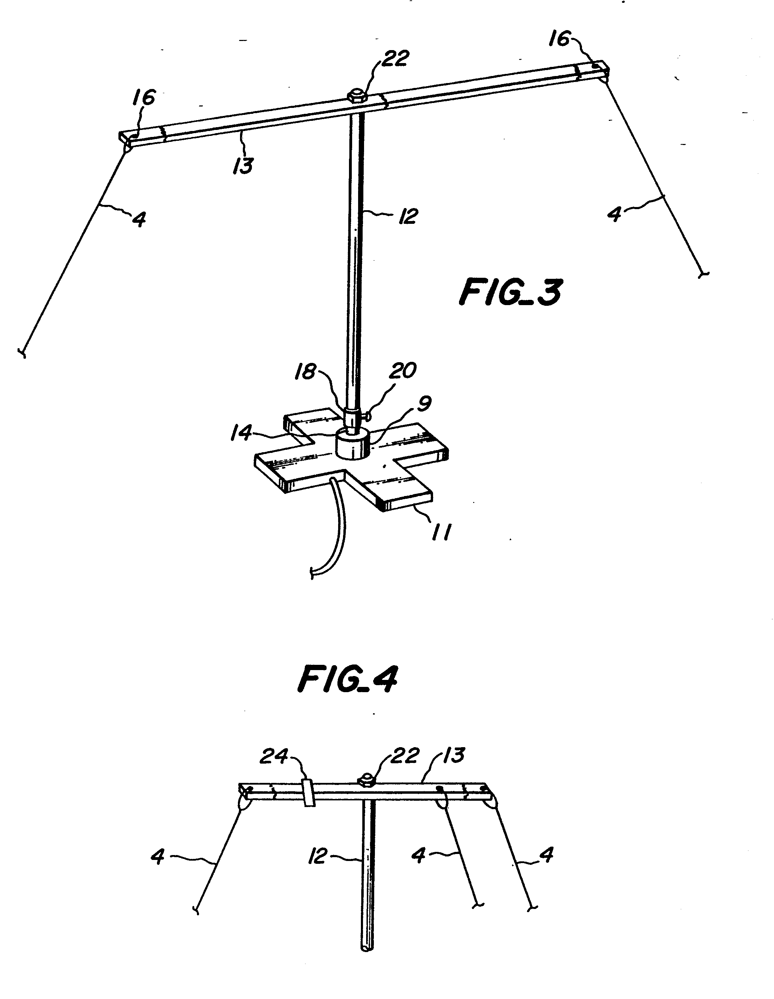

Figure 3 is a perspective view showing another embodiment of the present invention. The support base 11 is mounted on the floor, or secured to a desk or other elevated structure. In this embodiment, a motor 9 is secured to the base 11. A rotary shaft 12 is vertically fixed by set screw 20 extending through coupling 18 to engage output shaft 14 or motor 9. The center portion of a rotary arm 13 is fixed to the top of rotated shaft 12 by nut 22.

A flying model, which is not illustrated, is coupled to an end of each flexible hanging line 4, which are coupled at their other end to the ends of the rotary arm 13. Located at the end of arm 13 are holes 16. One end of hanging lines 4 are tied through holes 16 to the rotary arm 13. Models having an aerodynamic design secured to the other end of hanging lines 4 are maintained in a flying condition by the rotary movement of arm 13 caused by motor 9. If a model which is secured by hanging line 4 to one end of the arm 13 is heavier than a model secured to the other end of the arm 13, a weight is mounted on the arm 13 and is slide across the arm to compensate for the imbalance.

In Figure 4, counterbalance weight 24 is shown located on one side of rotary arm 13. The side of the rotary arm having the weight 24 offsets the weight of two models connected to two hanging wires 4 on the other side of the arm 13. Counterbalance weight 24 is slid on arm 13 to equalize the weight distribution on both sides of the arm 13. In the flying condition of the flying object models, the influence of centrifugal force of the weight on one side of rotary arm 13 exerted on the driven shaft 12 is substantially cancelled by the centrifugal force of the weight on the other side of rotary arm 13, so that during rotation, the driven shaft 12 is rigid.

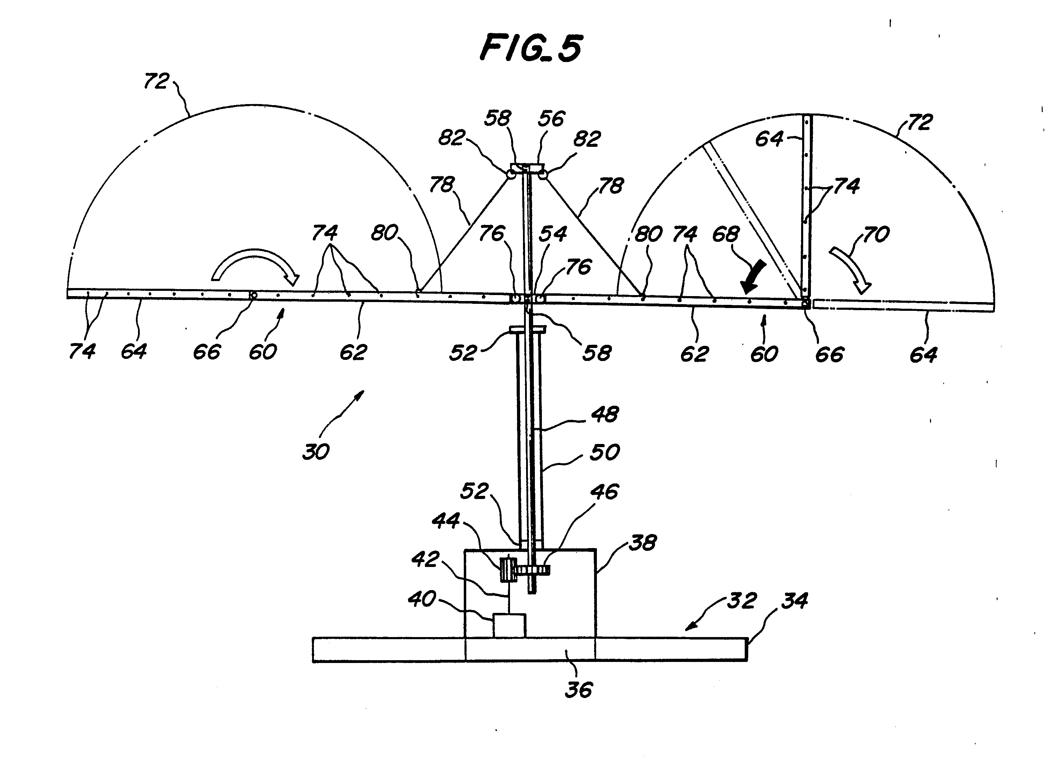

In Figure 5, propulsion mechanism 30 is shown. Propulsion assembly 30 includes base 32. Base 32 includes perpendicularly aligned sections 34 and 36. Sections 34 and 36 are secured to a top of a desk or other elevated surface by C-clamps to stabilize the propulsion mechanism during operation. In an alternate form of mounting, the base 32 can be secured to a floor by screws, nails or bolts penetrating through the base and secured to the floor.

Motor housing 38 covers motor 40. Driveshaft 42 extends vertically from the motor 40, having a pinion 44 located at the end of the driveshaft 42 opposite to the end of the driveshaft connected to the motor 40. Pinion 44 engages driven gear 46 mounted at one end of driven shaft 48. Driven shaft 48 extends vertically through hollow tube 50 and through bearings 52 mounted at each end of hollow tube 50.

In an alternate embodiment, driven shaft 48 includes a series of telescopically mounted sections. Each section is located within a section of a lesser diameter so that the sections are slideable within one another. Set screws extend through the wall of one section and engage the wall of an adjacent section. The set screws are located above the top of hollow tube 50 for ready access. By the loosening and tightening of the set screws, the height of driveshaft 48 is adjusted by the movement of the individual sections with respect to the remainder of the sections.

Secured to driven shaft 48, above the top bearing 52 is crossbar 54. Further vertically along the driven shaft 48 is crossbar 56. Crossbars 54 and 56 are secured to driven shaft 48 by screws 58. Two arms 60 extend from opposite ends of the crossbar 54. Arm 60 extending from the right side of crossbar 54 includes two sections 62 and 64. Section 62 is pivotable with respect to crossbar 54 and section 64 is pivotable with respect to section 62 about respective interconnections 66. Section 64 is shown in phantom being folded towards section 62 in the direction of arrow 68 and is shown in its fully extended position having been moved in the direction of arrow 70. A stop at pivot 66 prevents section 64 from extending beyond a continuous straight line with section 62. The arc of rotation of section 64 is shown by semicircle 72. Each rotary arm section 62 and 64 include several hooking holes 74 spaced along their lengths.

Section 62 is releasably mounted on crossbar 54 about wing nut shaft 76. Section 62 is moved to several different positions by the tightening and loosening of a wing nut on the wing nut shaft 76. The exact positioning of the sections 62 are determined by the position of support lines 78 which are secured at one end by a hook 80 to hooking hole 74 and at the other end by hook 82 secured to crossbar 56. The hooking holes 74 are also used to secure one end of the hanging line to the rotary arm 60. The other end of the hanging line is secured to a model of a flying object.

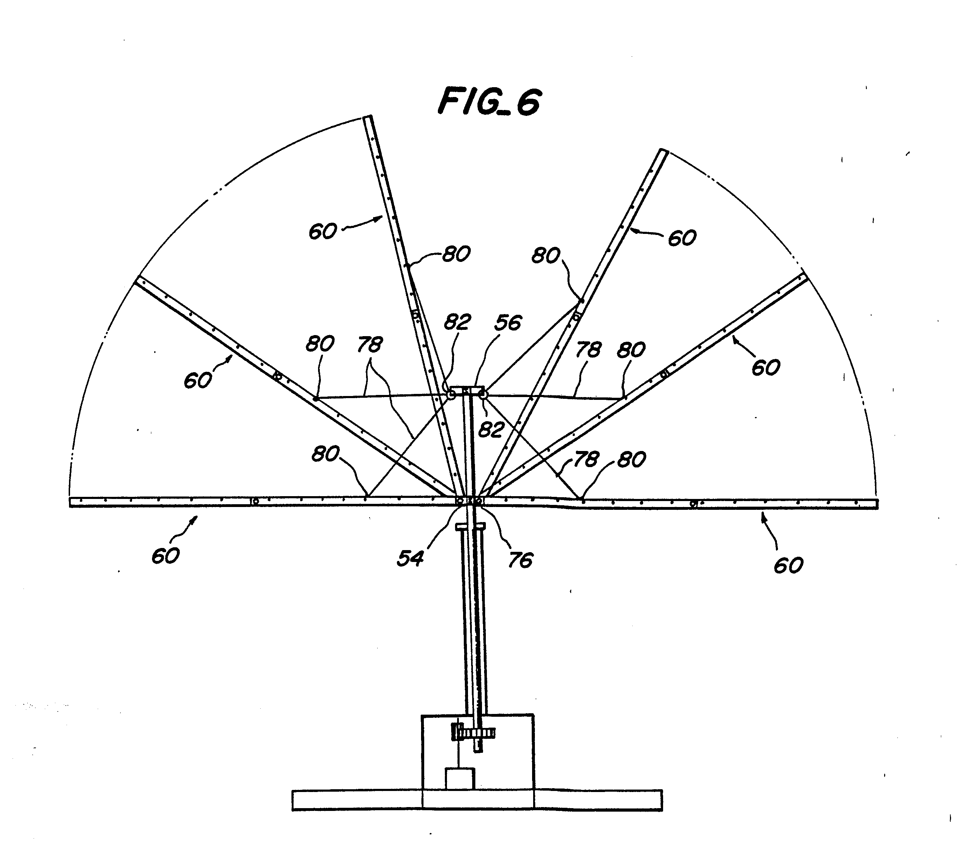

As shown in Figure 6, the positioning of each side of rotary arm 60 is independent of one another. Hook 82 is secured to the cross bar 56 and the hook 80 is secured to the rotary arm 60 through one of the hooking holes 74. It is to be appreciated that in Figure 6, only two sides of two rotary arms 60 are represented, one rotary arm being pivotably mounted at each end of crossbar 54. The other rotary arms 60 shown are merely illustrative of some of the different positions at which the rotary arms can be positioned.

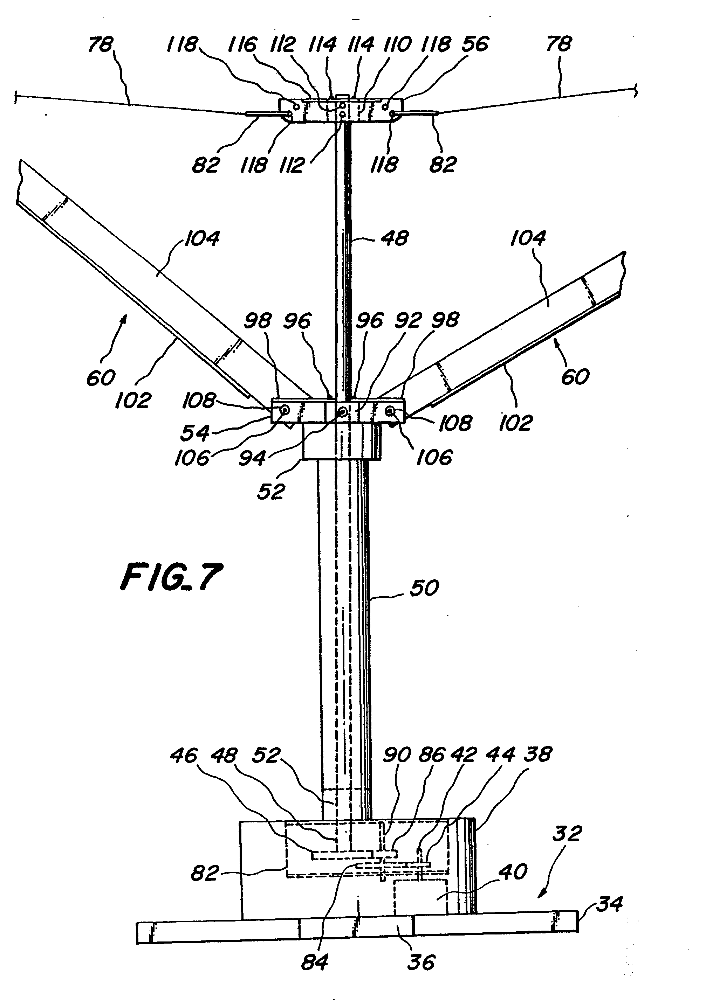

In Figure 7, a more detailed view of the propulsion assembly 30 is illustrated. Drive shaft 42 of motor 40 extends through U-shaped mounting bracket 82. Pinion 44 is drivingly engaged with gear 84 which rotates pinion 86 coaxially mounted on driveshaft 90. Pinion 86 drivingly engages gear 46 which is mounted at the bottom of driven shaft 48. Driven shaft 48 extends through hollow tube 50 and is mounted centrally in bearings 52. Driven shaft 48 extends axially through cylindrical boss 92 which is secured to driven shaft 48 by set screw 94. Crossbar 54, having a T-shape cross-section is secured to cylindrical boss 92 by screws 96 which extend through the top of the crossbar 54 into the cylindrical boss 92 in a direction parallel to the driven shaft 48. The top surface 98 of the T-shape crossbar 54 is aligned perpendicular to the center axis of the driven shaft 48. A semicircle is cut from the top surface 98 of the crossbar 54 to receive the driven shaft 48. A plan view of the top surface 98 of the crossbar 54 reveals that it is also T-shape, providing two cutout areas for the pivoting of rotary arms 60.

Rotary arm 60 is also of a T-shape cross-section with the edge of the top surface of the T being shown at 102. A portion of the top surface of arm 60 is cut away near the end of each arm 60. Face 104 of rotary arm 60 contacts the rear face of crossbar 54. The rotary arms 60 are held to the crossbar 54 by wing nuts. In Figure 7, wing nut shaft 106 is shown mounted within nut 108. Upon turning of the wing nuts to release the lock on each rotary arm 60, rotary arms 60 are movable to a different position until the wing nut is retightened against the face of the rotary arm 60, opposite to face 104. Two screws, not shown, secure crossbar 54 to boss 92. These screws extend through the rear face of the crossbar 54 into the boss 92 in a direction perpendicular to the longitudinal axis of the driven shaft.

Crossbar 56 is of the same construction as crossbar 54. Crossbar 56 is mounted on the opposite side of the driven shaft from crossbar 54. Cylindrical boss 110, shown in phantom, is coaxially mounted on driven shaft 48. A set screw, not shown, extends through the cylindrical boss 110 in a direction perpendicular to the longitudinal axis of the driven shaft 48 to secure the boss to the driven shaft. Two screws 112 secure the crossbar 56 to the boss 110. Also, two screws 114 secure the top surface of the crossbar 56 to cylindrical boss 110.

Trailing edge 116 of the T-shape top surface of the crossbar 56 is shown. The top surface of the crossbar 56 is aligned opposite to the top surface of crossbar 54. A semicircular recess in the leading edge of the T-shape top surface of the crossbar 56 is now shown. The top of the driven shaft projects slightly above the surface of the cross 56.

At opposite ends of the crossbar 56 are defined holes 118. Hanging lines 78 are each secured at one end to a rotary arm 60 and at the other end to hook 82 which extends through one of the two holes 118 located at each end of the crossbar 56. Hook 82 is formed from a piece of wire bent into a two to three tiered ring, its opposite ends being free. The diameter

- 23 -                    0206601

of hole 118 is greater than the width of the hook 82 so that the hook 82 is easily movable within he hole 118.

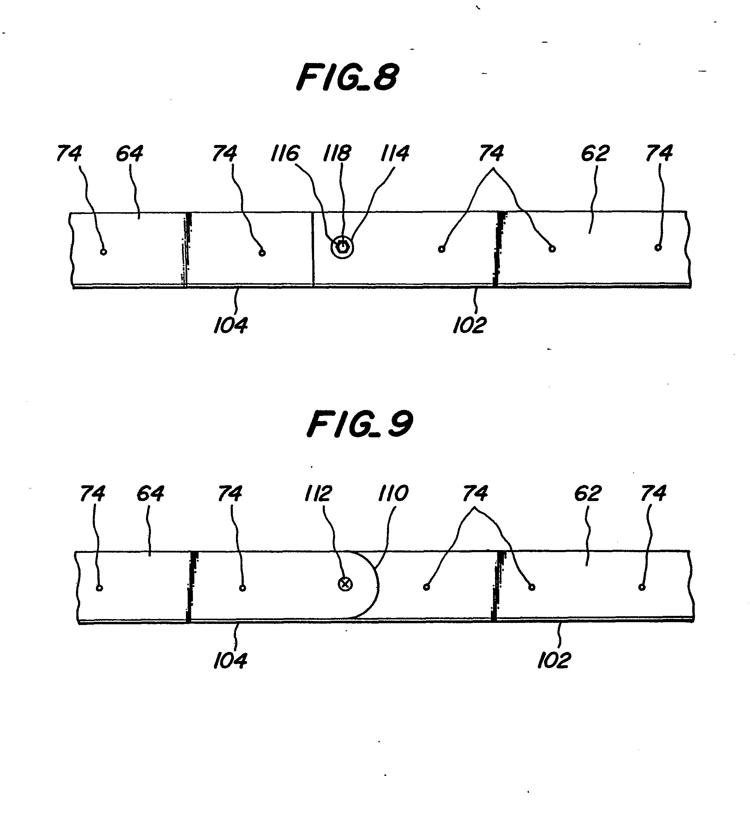

In Figures 8 and 9, both sections 62 and 64 of rotary arm 60 are shown. Both sections 62 and 64 are T-shape in cross section with the top of the T forming the projecting bottom edge 102. Section 62 has a cross-section in the shape of a T at the end opposite to the end mounted on the crossbar 54. The end of section 64 engaging the end of section 62 shown in Figures 8 and 9 is partically cut away so that the end 106 of edge 104 abuts against end 108 of edge 102 of section 62. The side face of the vertical portion of the T-shape of section 64 is cut into a curved edge 110. A screw 112 extends through overlapped ends of sections 62 and 64. The opposite side of the screw 112 is shown in Figure 8 as including washer 114, nut 116 and screw shaft 118. The screw, washer and nut assembly are loosely tightened so that section 64 is pivotable with respect to section 62 about screw shaft 118. In the fully extended position of section 64, end 106 of edge 104 abuts against end 108 of edge 102. Hooking holes 74 are shown spaced along the length of each arm section 62 and 64 for receipt of one end of hanging wires 78 and hanging line 4.

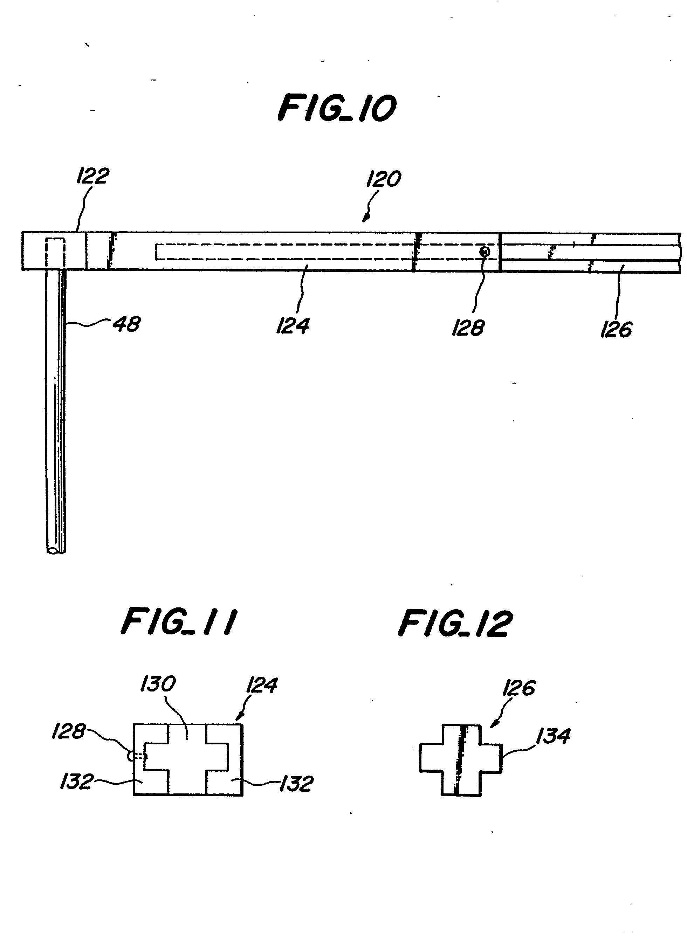

In Figures 10 and 12, an alternate rotary arm assembly is shown. Rotary arm 120 is shown mounted on crossbar 122 which is secured to driven shaft 48. Rotary arm 120 includes two sections 124 and 126.

- 24 -                    0206601

Section 126 is slidable within section 124 and is held in position by set screw 128 extending through section 124 and engaging section 126.

In Figure 11, section 124 is shown as defining a channel 130 between two C-shape sections 132. Extending through one of the C-shape sections 132 is set screw 128. In Figure 12, section 126 is shown which is shaped complementary to channel 130 so that section 126 will slide within channel 130 with sufficient space for the set screw 128 to extend and engage one side 134 of section 126 to secure section 126 within channel 130. By unscrewing of set screw 128 and moving of section 126, the length of rotary arm 120 is changed.

In Figure 13 a sectional view of a model of a flying object 136 is shown. Hanging line 4 extends through an opening 138 located between the cockpit and engine cowling of the model 136. The location of opening 138 is in the area of the center of lift of the model 136, at a point along a line extending perpendicular to a line drawn between the center of lift and the center of gravity of the model. The opening 138 is located radially inward, on one side of the center of lift of the fuselage, the side being the side of the model which is closest to the external power propulsion assembly for the model.

In Figure 13, the wing section has been removed so that the hanging lien 4 may pass through the hollow body of the model 136. Paper clip 140 is tied to one end of the hanging line 4 for securing the hanging line 4 to a hooking hole 74 of the rotary arms of the propulsion assembly 30. At the other end of the hanging line 4 is a coupling assembly 142. Coupling assembly 142 comprises two conical cymbal members 144 and 146 and member 148. Member 148 is tied to the other end of the hanging line 4. The diameter of the member 148 is greater than the opening of cymbal 146 through which hanging wire 4 passes. Cymbals 144 and 146, as shown in Figure 14, include a bottom edge 150 and 152.

As shown in Figure 15, when the hanging line 4 is drawn taut, cymbal 144 is pressed against the inner side 154 of the model 136 and surrounds the opening 138. The top edge of cymbal 146 is pulled into intimate contact with the top edge of cymbal 144. When the model 136 is rotated in a circular path, the cymbals 144 and 146 will prevent any twist in the hanging line from being transferred to the model. Cymbal 144 is held against the inner surface 154 of the model 136 and is fixed with respect to cymbal 146 which is movable with hanging line 4. Member 148 presses the top edges of cymbals 144 and 146 together.

Model 136 during rotation by the propulsion mechanism 30, is positioned slightly inclined to the horizontal. To aid in the stabilization of the flight of the model, a weight 156 is placed on the exterior of the model 136 in the area of the engine cowling.

- 26 -

0206601

The weight 156 may be of a thin strip of lead or a segment of modeling clay. The weight 156 may also be located on the interior of the model 136 during assembly for cosmetic reasons.

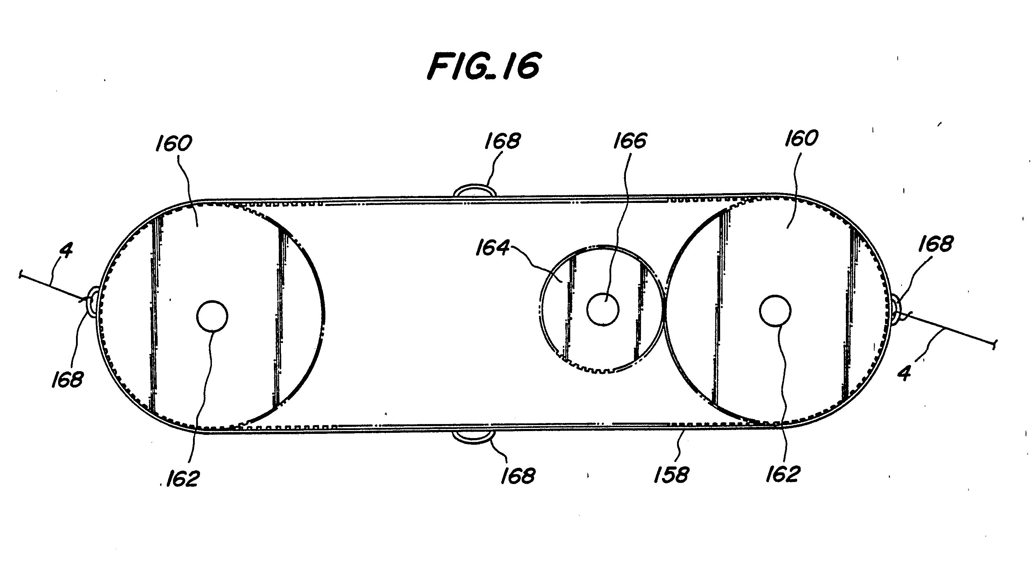

In Figure 16, an alternate propulsion mechanism for propelling a model attached at one end of a hanging line 4 is shown in plan view. An endless belt 158 extends about the periphery of two gears 160 each mounted on a vertical axle 162. One of the gears 160 is driven by a driving pinion 164 mounted on a drive shaft 166 which is driven by a motor or a drive mechanism as shown in Figure 7. The teeth of gear 164 engage the teeth of gear 160 to drive gear 160. The teeth of the driven gear 160 engage the teeth of belt 158. The belt 158 drives the other gear 160. Attached to belt 158 are hanging line handles 168, spaced about the periphery of the belt. A hanging line 4 is tied to each hanging line handle 168.

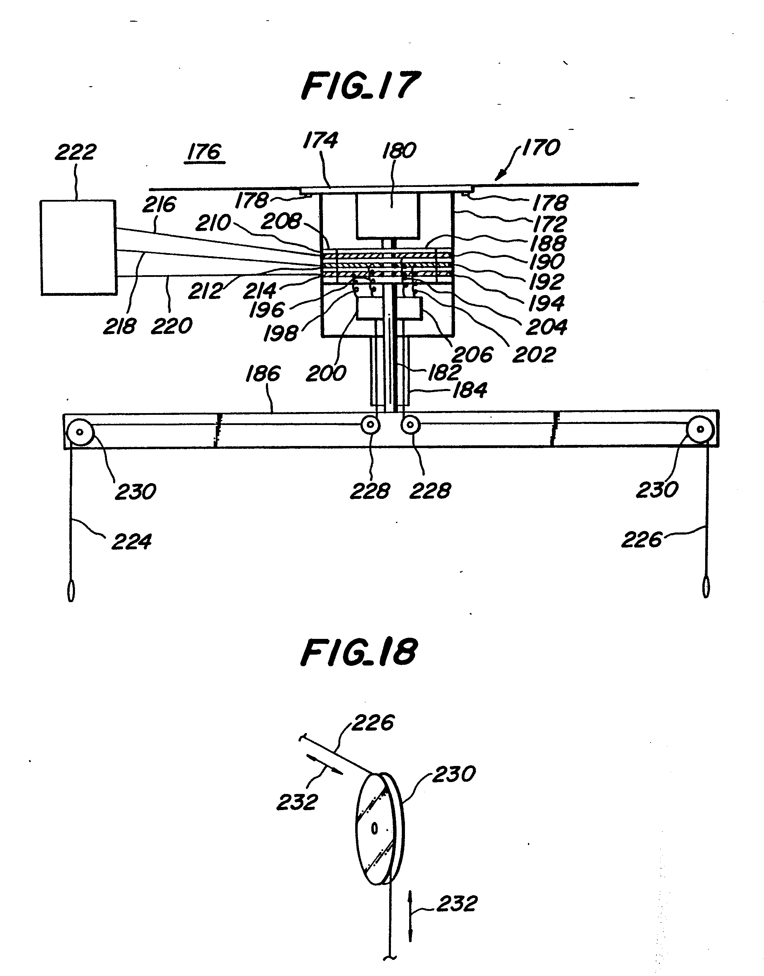

In Figure 17, a ceiling mounted propulsion apparatus 170 is shown. The propulsion apparatus includes motor housing 172 attached to mounting plate 174. Mounting plate 174 is secured to ceiling 176 by screws 178. Mounted within motor housing 172 is motor 180. Motor 180 drives driveshaft 182 which extends through the motor housing 172 and tubular member 184. Drive shaft 182 is connected to rotary arm 186. Attached to driveshaft 182 is rotor 188. Rotor 188 includes three electrically conductive strips

- 27 -

0206601

190, 192 and 194. Wires 196 and 198 extend from conductive strip 192 and 194, respectively, and are connected to motor 200 which is secured to driveshaft 182. Wires 202 and 204 are electrically connected to conductive strips 192 and 190 at one end and to motor 206 at the other end. Motor 206 is secured to driveshaft 182. Stator 208 circumferentially surrounds rotor 188 and includes electrical contact brushes 210, 212 and 214, which electrically contact conductive strips 190, 192 and 194, respectively, when driveshaft 182 is rotated by motor 180. Electrical contact brushes 210, 212 and 214 are connected by wires 216, 218 and 220 to power source 222. By controlling the energizing of motors 200 and 206 by the control of power source lead lines 216, 218 and 220, motors 200 and 206 driving take-up reels (not shown) of hanging lines 224, 226 change the length of hanging wires 224 and 226. Hanging wires 224 and 226 each extend over rotatable pullyes 228 and 230.

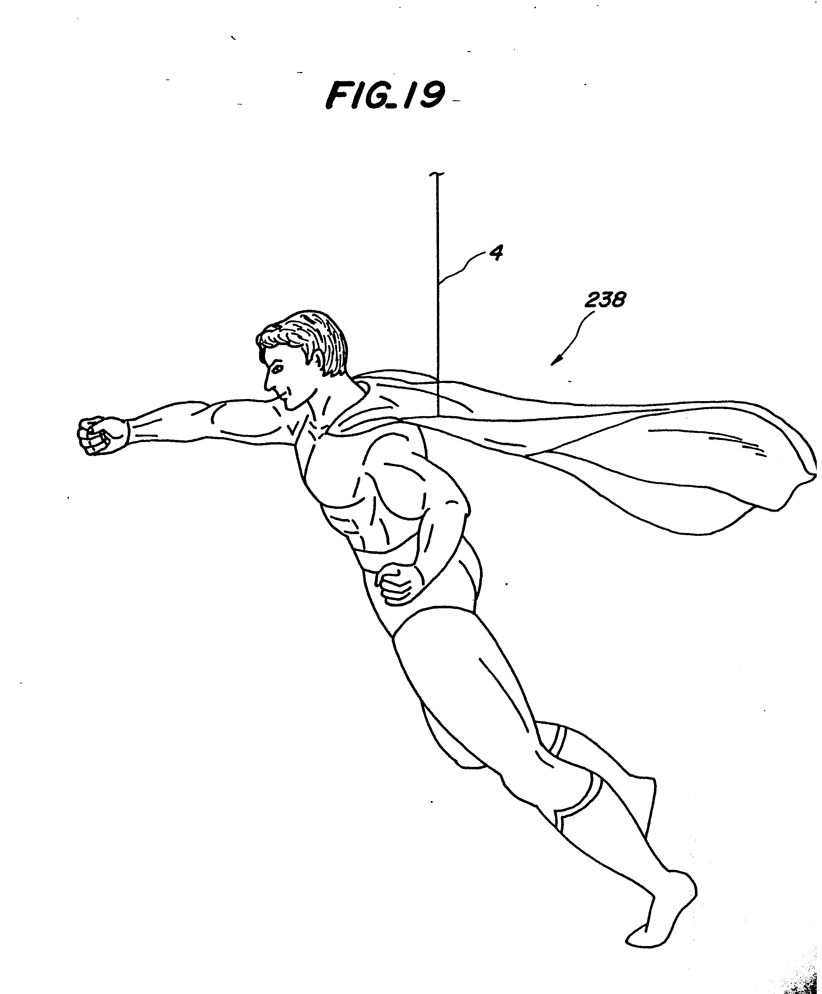

In Figure 18, pulley 230 is shown with hanging wire 226 being movable in the direction of arrows 232. The rotor 188, motors 200 and 206, rotating arm 186 and pulleys 228, 230, are all rotatable with drivehsaft 182 upon actuation of motor 180. The length of the hanging wires 224 and 226 is altered during rotation of the driveshaft 182 to change the flight path of the model attached at the ends 234, 236 of the hanging wires 224, 226.

Another propulsion mechanism used for the flying of models of flying objects uses a household ceiling fan. A support structure is slipped over the blades of the fan which rotate, at their slowest speed, at approximately 40 rpm. The support structure is connected to one boss of a slip clutch. Connected to the other boss of the slip clutch are rotary arms such as those shown in Figures 5, 6 and 10.

Contact pressure between the two clutch bosses and the interposed friction plate is controlled by springs. The spring pressure is controlled by a screw to control the friction on the friction plate by the clutch bosses. The spring pressure is reduced to cause slip between the clutch bosses and to rotate the boss connected to the rotary arms at 20 rpm. Models of flying objects are connected by hanging wires to the rotary arms for flying of the aerodynamically designed models and the appearance of flying of the non-aerodynamically designed models.

The present invention has been explained by reference to the use of models having an aerodynamic design. Models of flying objects, such as futuristic spaceships and "superhero" figures which are not aerodynamically designed are also usable with the propulsion mechanism of the present invention.

In Figure 19, a model of a flying object is shown. Model 238 is connected to hanging line 4 and is movable in a circular flight path by the centrifugal force transmitted to the model 238 by a propulsion mechanism. This differs from the flying of the models 1, 2 and 3, shown in Figure 1, wherein the models are aerodynamically designed in the same manner as are the full-sized aircraft upon which they are modeled. Therefore, the models shown in Figure 1, upon receiving an external centrifugal force act as an airfoil, to develop a resultant force acting upwards, transversely to the direction of flight.

The model shown in Figure 19 is displayed and appears to fly by the use of the propulsion mechanisms described for the present invention. Although the model 238 does not experience the lift realized for aerodynamically designed models, it will nevertheless appear to fly when transparent hanging lines secure it to a propulsion mechanism.

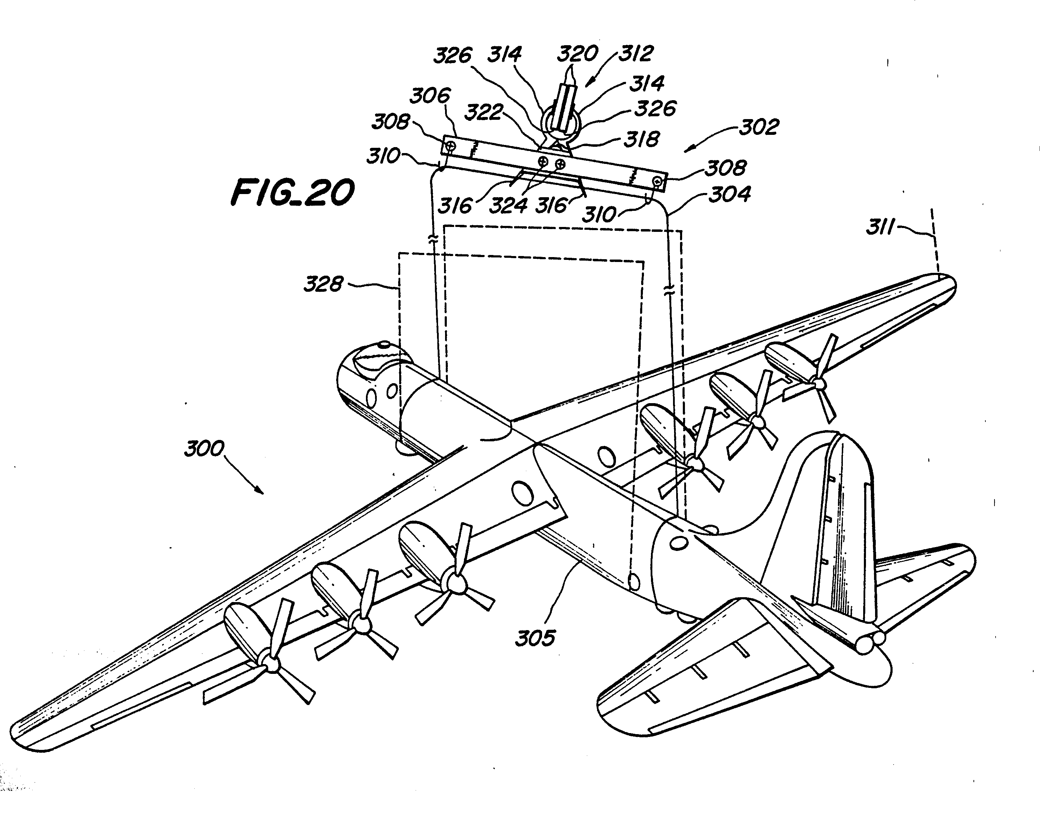

In Figure 20, flying model 300 is shown. A clip-on assembly 302 is also shown supporting single hanging line 304 which is wrapped around the body 305 of the model 300 at two places.

The clip-on assembly 302 includes aluminum bar 306 with two screws 308. Screws 308 each secure a hook 310 onto the bar 306. Hooks 310 support a hanging line or lines for a model of a flying object. Clip 312 is a large paper-type clamping clip having opposed curved sides 314 extending from the top tip of the clip to handle sections 316 which are located at the bottom of the clip. A spring 318 separates the two sides 314 of the clip and spring biases one side of the clip with respect to the other side of the clip. The clip-on assembly 302 includes two parallel extending slats 320, one slat 320 secured to each curved side 314 of the clip-on assembly 302. The entire clip-on assembly 302 is secured to a mounting plate 322 which is in turn secured to bar 306 by screws 324.

The clip-on assembly 302 is secured to a rotary arm such as the rotary arm 60 shown in Figures 6, 7, 8 and 9 for supporting a model of a flying object in a flying condition. The slats 320 clip onto either side of face 104 of rotary arm 60 shown in Figure 7. The bottom edge 326 of each slat 320 engages projecting bottom edge 102 of the rotary arm. The clip slats are aligned parallel to the rotary arm so that the bar 306 extends perpendicular to the rotary arms. Upon rotation of the propulsion mechanism, the bar 306 is rotated and the model suspended from the hanging line 304 engaging the hooks 310 secured to the bar 306, is also caused to rotate.

In the embodiment shown in Figure 20, the hanging line 304 is secured to the body 305 of the model 300 at two points. One end of the hanging line 304 is tied around the body 305 towards the rear of the fuselage and the other end of the hanging line 304 is tied around the fuselage at the front portion of the fuselage. The hanging line 304 is then draped across the hooks 310 mounted on the bar 306. By this arrangement, added support is lent to the body of a large type

- 31 -

0206601

flying object and increased stability is achieved during flight. If such a large flying object were anchored by a single hanging line during flight, there is an increased probability that the flight of the flying object may be unstable.

In an alternate embodiment, hanging line 328, shown in phantom, is looped around the underside of the flying object at two locations and doubled back and suspended from hooks 310 secured to bar 306. Hanging line 328 is a single piece of fishing line or thin wire, being as thin as possible so as not to be visible during flight of the flying object. By hooking two sections of the hanging line 328 on each hook 310, increased stability is given to flight of the model object 300 during rotation.

The another embodiment of the present invention, hanging line 311, shown in phantom, is secured at one end to one wing of model 300 and is secured at its other end (not shown) to the rotary arm 60 of the propulsion mechanism shown in Figures 6 or 7. Hanging line 311 is optionally used with single hanging line 304, doubled hanging line 328 or not at all. The hanging line 311 serves to orient the model during flight at a particular angle of tilt.

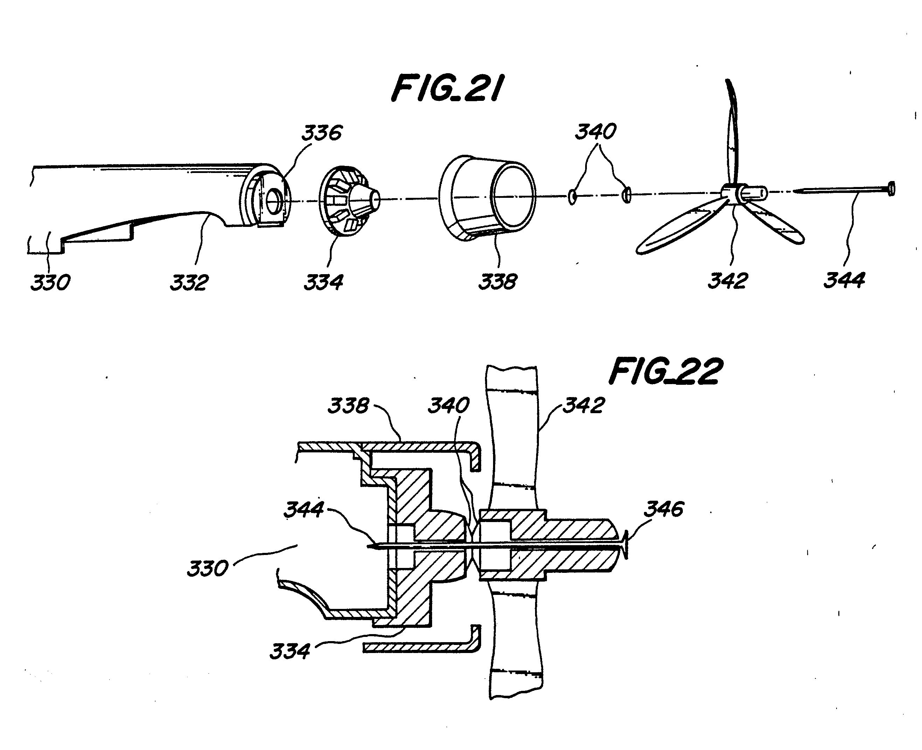

In Figure 21, the body 330 of a model airplane is shown. Recess 332 defined by the body 330 is shaped complimentary to the wing section of the model plane. An engine section 334 is shown spaced ahead of the engine

0206601

end 336 of the model body. Engine cowling 338 is shown spaced from the engine section 334. Two conical shape cymbals 340 are shown located ahead of the engine cowling 338 and before the propeller 342. A shaft 344 is shown located ahead of the propeller 342.

In Figure 22, the propeller assembly is shown in assembled form. The conical shape cymbal members 340 have a flattened surface at one end. The two flattened surfaces engage one another when the shaft 344 is located through the center of the propeller 342 and engine section 334. The wide end of each conical shape cymbal 340 is fixed respectively to one of the propeller 342 and the engine section 334. The shaft 344 is fixed at its pointed end within the body 330 of the model plane. The propeller 342 is loosely fit on the shaft 344 and has sufficient play to slide back and forth between the head 346 of the shaft 344 and the cymbal member 340 mounted on the engine section 334.

During flight of the model as propelled by a propulsion mechanism, the propeller is more readily capable of rotation during flight, even at slow speeds, due to the friction reducing cymbal members 340 interposed between the propeller 342 and the engine section 334 of the model.

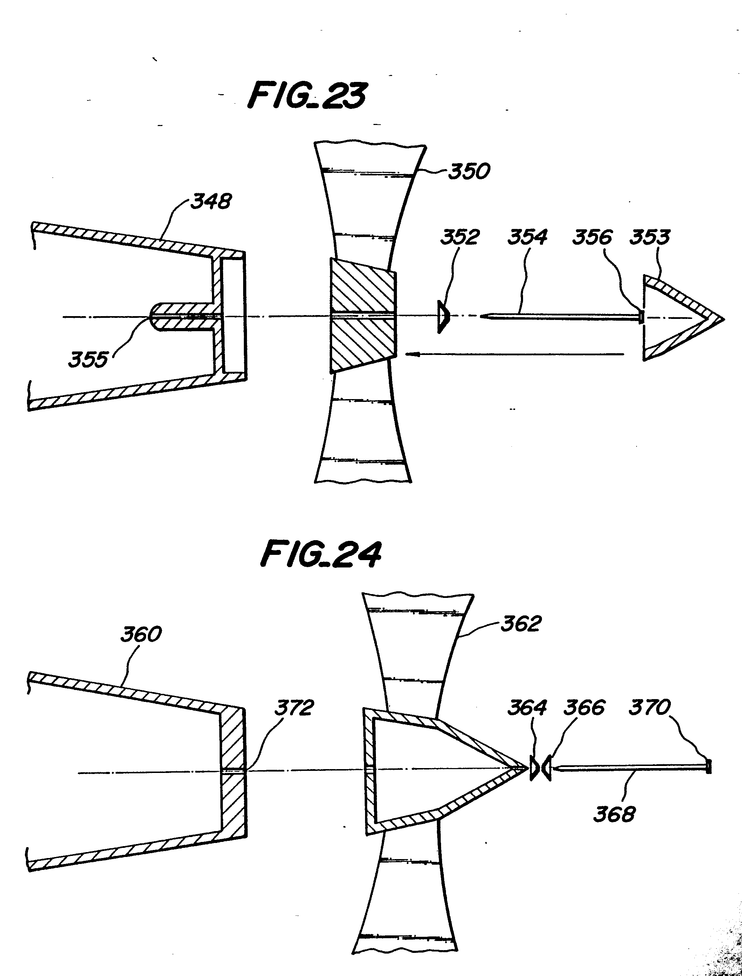

In Figures 23 and 24, a similar propeller arrangement to the propeller in Figures 21 and 22 is shown. However, in Figures 23 and 24, a pusher type propeller is shown being located at the trailing edge of a wing of a model plane. In Figure 23, the engine housing 348 is shown with the propeller 350 spaced in front of the engine housing 348. A single conical shape cymbal member 352 is shown spaced between the propeller 350 and a propeller tip 353. A shaft 354 extends through the center of the propeller 350 and through a channel 355 defined by the engine housing 348. The shaft is fixed in the engine housing 348. The head 356 of the shaft 354 is fixed to the propeller tip 353. The conical member 352 is interposed between the propeller 350 and propeller tip 353. The cymbal member 352 is secured to the propeller 350, the shaft 354 is secured within the passage 355 and the head of the shaft 356 is secured to the propeller tip 353. During flight of the model having the rear mounted pusher-type propeller shown in Figure 23, the propeller 350 rotates between the stationary engine housing 348 and the stationary propeller tip 353. The cymbal member reduces the friction of the propeller on the stationary propeller tip 353 and allows rotation of the propeller at slower speeds of flight than is experienced without the cymbal member.

In Figure 24, engine housing 360 is shown spaced from a propeller assembly 362. Two conical washer members 364 and 366 are spaced from the propeller assembly 362 and spaced from shaft 368. When assembled, washer 364 is secured to the propeller assembly 362 and washer 366 is secured to the head 370 of the shaft 368.

0206601

The other end of the shaft 368 is fixed within passage 372 defined by the engine housing 360.

During flight of the model including the propeller assembly shown in Figure 24, washer 364 contacts and spins against washer 366 which is stationary. This aids in reducing friction of the propeller during forward motion of the model having a pusher-type propeller. The spinning of the propeller assembly shown in Figure 23 or Figure 24, even at relatively slow speeds, increases the realism of the flight of the flying object by an external propulsion mechanism.

The propulsion apparatus can easily fly the model of a bird often gliding by spreading the wings such as an eagle or a gull.

The propulsion force of an aeroplane is given by rotating a propeller, but that of a bird is given by flapping the wings. Various methods are schemed for flapping the wings of a toy bird.

For instance, there is a method of flapping the wings by using power means such as a miniature motor with a dry cell and the like equipped in the body, but like the case of flying objects it is also possible to flap the wings by rotating an arm, giving a turning movement to a model bird hung through the hanging line and utilizing wind pressure generated by the turning movement.

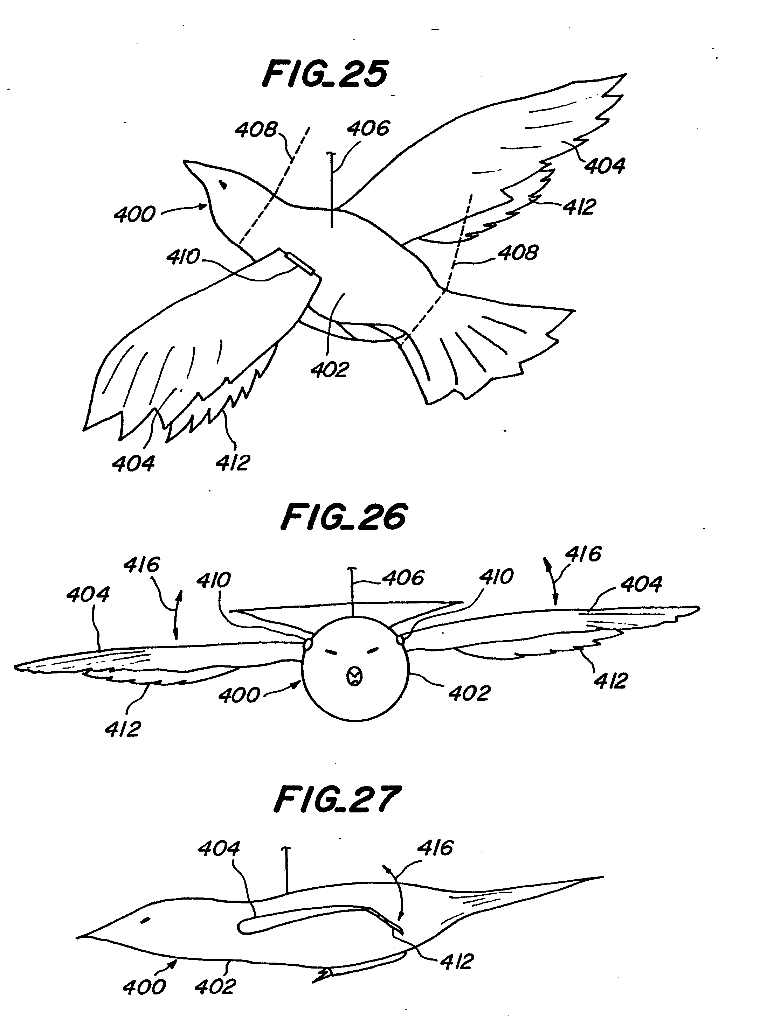

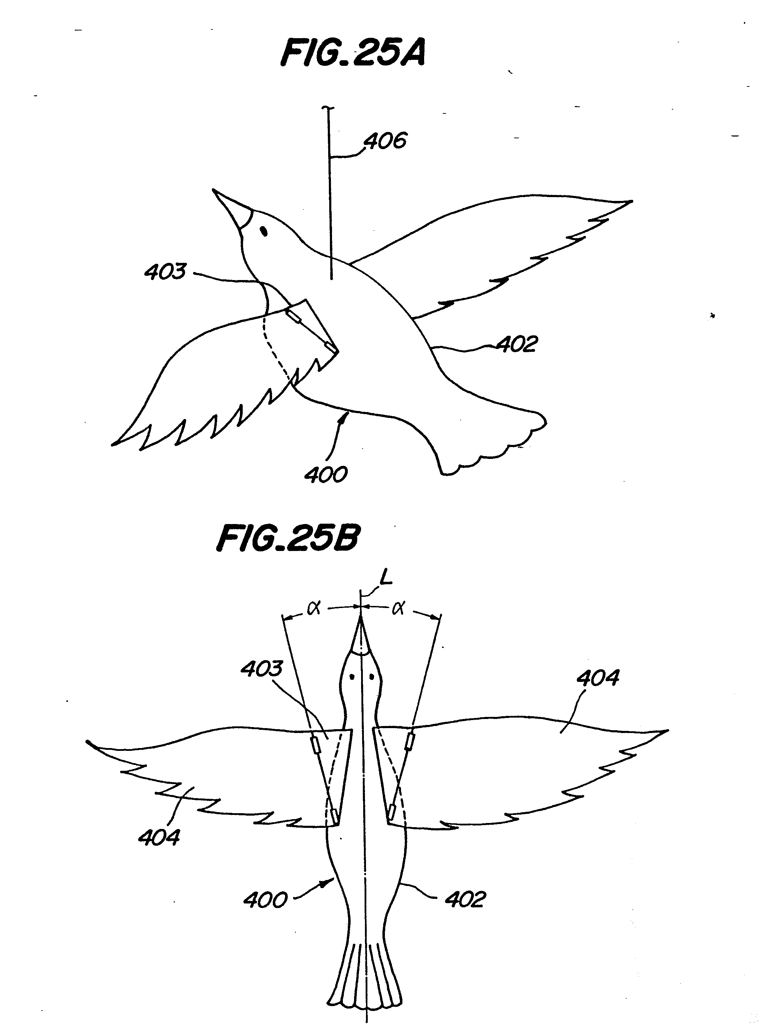

In Figure 25, a model 400 of a bird is shown. The bird is made of paper with a hollow central body section 402 and wings 404. The hollow body section 402 is filled with weighting material to aid in its stability during flight when powered by the external propulsion mechanism. The bird is suspended from the propulsion mechanism described in the previous Figures by hanging line 406 or alternately, by single hanging line 408, shown in phantom, which is adapted to be suspended from clip-on assembly 302 shown in Figure 20. Therefore, the model 400 is balanced, horizontally held and hung from a rotary arm through the hanging line 406.

Each wing 404 is secured to the body 402 of the model 400 by hing 410. In other words, both wings 404 are symmetrically pivoted on shoulder portions 403 with respect to a center line L through hinges 410 as shown in Figures 25A and 25B.

In this case, the wings 404 are secured to the shoulder portions 403 to open at an angle $\alpha$ of preferably 20-30° in the forward direction of the bird with respect to the center line L as shown in Figure 25B. A flap 412 is located downward along the trailing edge of each wing 404 and the flaps 412 hang under the wings 404 viewed from the front. The hinge 410 is made of masking tape or cellophane tape and is of sufficient elasticity to allow the wing 404 to flap with respect to the body 402 during flight.

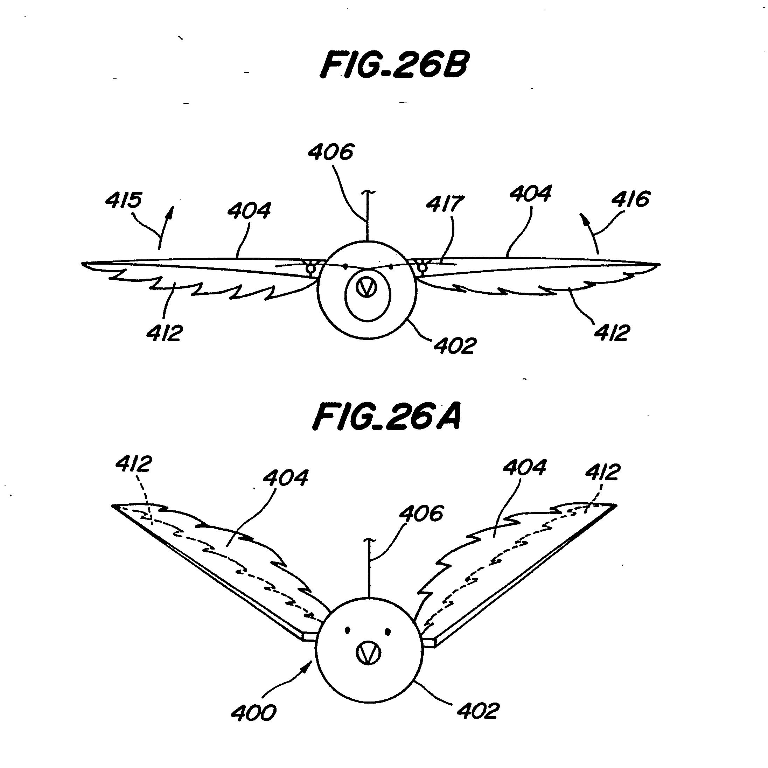

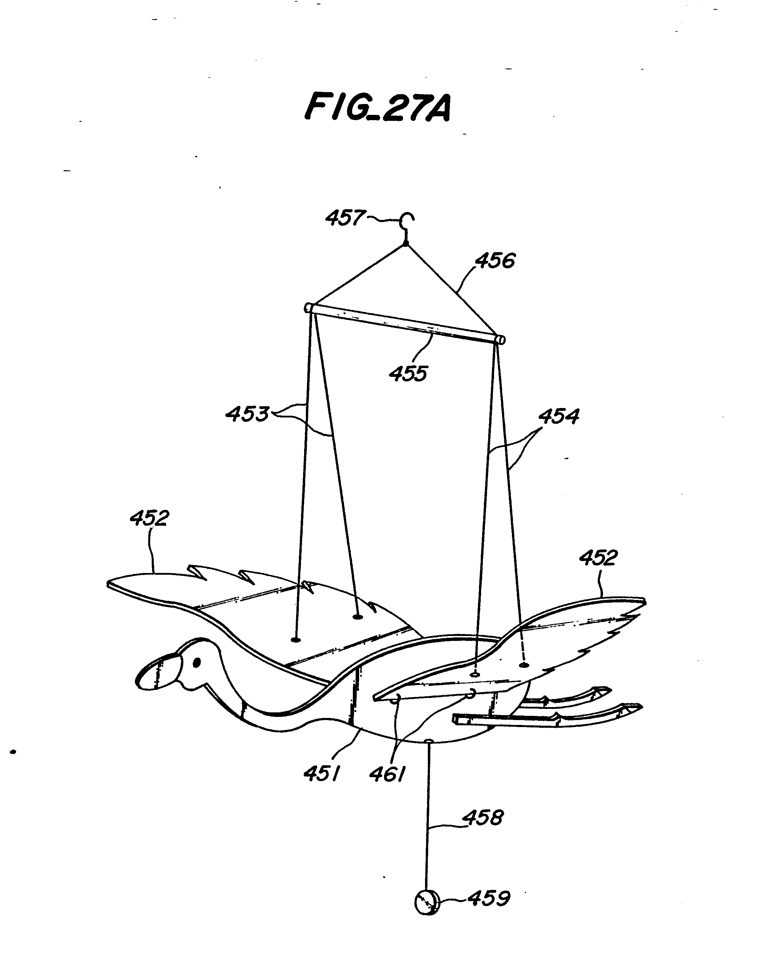

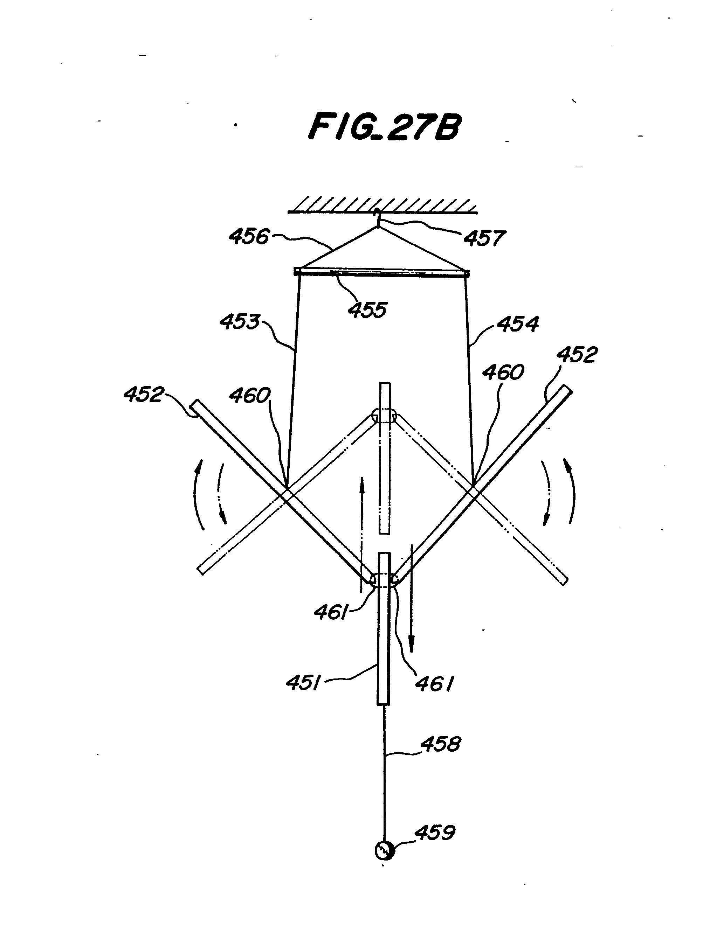

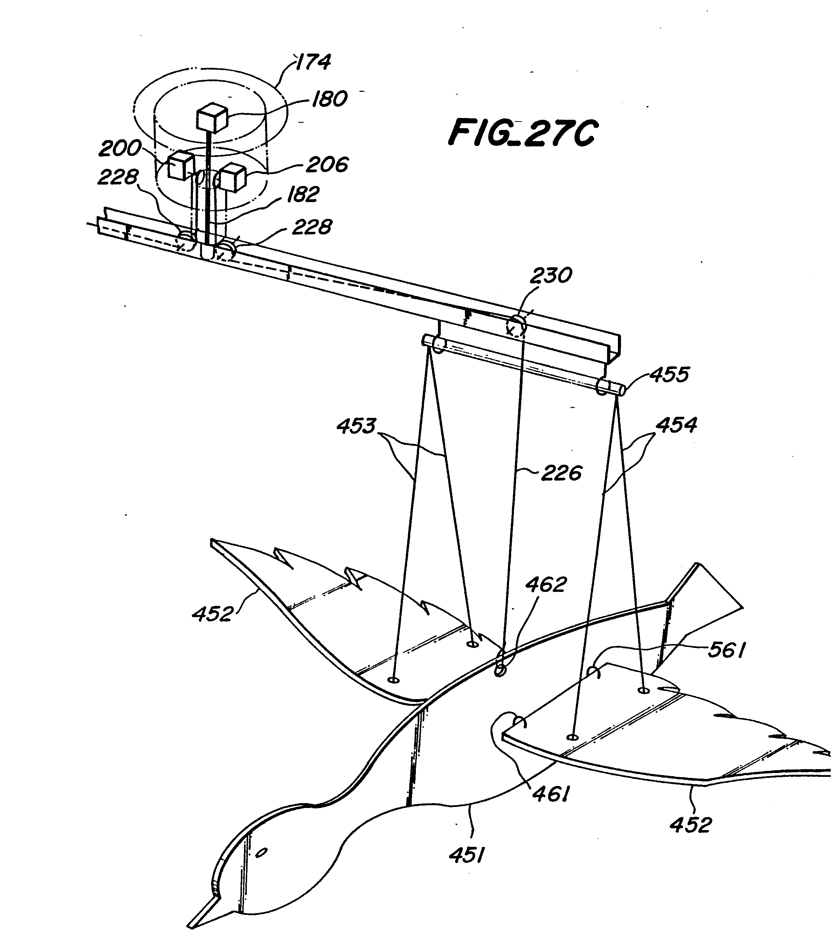

In Figures 26 and 27, the model 400 is shown with wings 404 being fully extended and the arrow 416 represents the flapping movement of the wings during flight, which s caused by an external propulsion mechanism.

During flight, air passes over the top and bottom surfaces of the wings 404 as described earlier for an airplane wing. This causes the wings, anchored at hinges 410, to be forced upwards into an elevated position above the body 402 by the passage of air. When the wing is at its maximum elevation, as allowed by the flexibility of the hinges 410, the flaps 412 is covered by the wings 404, so that the force of the air engaging the top surface of wings forces the wing downward to a position extending laterally from the body 402 as shown in Figure 26. Since the wings 404 have an angle of α with respect to the forward direction, respectively, the wings 404 forced upward show the back thereof forward with respect to the front as shown in Figure 26A.

At the same time, the flaps 412 are hidden behind the wings 404, so that the wind pressure against the flaps 412 disappears and simultaneously appears on the upper surfaces of the wings 404.

Therefore, the wings 404 is pushed downward by the wind pressure. When pushing down, the wings are back to the condition shown in Figure 26, the flaps 412 again receive the wind pressure, and the wings are rotated upward. Thus, the continued circular rotation of the model 400 causes the wings 404 to flap as illustrated by arrow 416. In order to help the flapping of the wings, springs 417 are built in the body by extending toward the inside of the wings 404 for enabling a reversal movement of the wings, as shown in Figure 26B. In this sense, it is a matter of course to provide a stopper for controlling the rotation at a suitable position for preventing the wings from the upward or downward condition as it is by the wind pressure. The continued upward and downward motion of the wing with respect to the body 402 simulates the flapping motion of a bird in flight. Further, from the details of a live bird shown on the model 400 and with the transparent characteristics of a clear fishing line or thin wire used as a hanging line, the model appears to be a live animal in flight. This is accomplished without the use of an internal motor and is a result of the wind resistance of the model to the wind forces produced by the external propulsion mechanism.

Another type of a bird model is also applicable to the apparatus according to the present invention.

As illustrated in Figure 27A, wings 452 of such a model are pivotally secured on both sides of a body member 451 of the bird model by means of hinges 461, and two pairs of supporting lines 453 and 454 are secured at their one ends to suitable portions of the wings 452. The other ends of the supporting lines 453 and 454 are fixedly provided at both ends of a horizontal rod 455, at which a hanging line 456 having a hook 457 thereon is provided. Upon the hook 457 being hooked on the ceiling, the bird model assembly is designed to depend therefrom, as if a bird spread its wings virtually horizontally. A knob 459 is then hung from the lower end of the body member 451 by way of a pulling line 458. This is illustrated in Figure 27B, a front view of the bird model, wherein the body member 451 is shown to include the wings 452 pivotally secured on both its sides by means of the hinges 461. Through the horizontal rod 455, the wings 452 are hung down from the ceiling at a hanging point 460 by means of the associated supporting lines 453 and 454. Thus, if the knob 459 is now pulled down in the direction indicated by an arrow (a solid line), then the wings 452 swing around the hanging point 460 and upwardly with respect to the body 451.

Subsequent removal of an external force from the knob 459 causes the body member 451 to be lifted up to a position shown by a broken line and the wings 452 to be swung around the hanging point 460 and downwardly with respect to the body 451.

The overall arrangement is balanced in the point that the wings 452 are virtually horizontally located around the body member 451. Thus, as the knob 459 is pulled down and an external force is released therefrom, the wings 452 start to swing around the hanging point 460 from the position indicated by a solid line to that indicated by a broken line in Figure 27B, so that the body member 451 is vertically moved. This vertical movement is a vibrating phenomenon occurring by applying an external force upon the knob 459. Once the external force is removed from the knob 459, the vertical movement of the body member 451 attenuates gradually, until·the wings are horizontally at rest. Thus, the bird model assembly provides a sort of toy which looks just as a flapping bird.

This type of toy is only designed to depend from one point on the ceiling. However, when this birdlike toy is rotated by the propulsion apparatus according to the present invention, then it looks just as a live bird flying about in the air.

As is the case with the method for effecting flapping of the wings by making use of an air pressure, however, it is required to vertically move the body member of the toy by the application of an external force so as to provide the toy with continued flapping action in flight.

The method to this end is illustrated in Figure 27C.

As already explained with reference to Figures 17 and 18, the mounting plate 174 of the propulsion apparatus is secured to the ceiling. The rotary arm is connected to the lower end of the drive shaft 182 extending from the motor 180. A hanging line 226 is arranged along the drive shaft 182 so as to rotate with the shaft, and extends from small motors 200 and 206 which are driven together with the drive shaft 182.

The hanging line 226 depends from the end portion of the rotary arm through pulleys 228 and 230, and is attached at its leading end to an upper portion 462 of the body member 451. Referring to Figure 17, the motors 200 and 206 are separately driven so as to freely extend or retract the hanging line 226 from the end portion of the rotary arm. Since the motors 200 and 206 are separately driven by a power supplied from a power source 222 of Figure 17, it is evident that the hanging line can be extended or retracted or pulled up periodically by supplying power alternately. In other words, it is possible to effect continued flapping of the flapping birdlike toy, while the rotary arm is rotated with pulling up and down the hanging line 226 several times per minute.

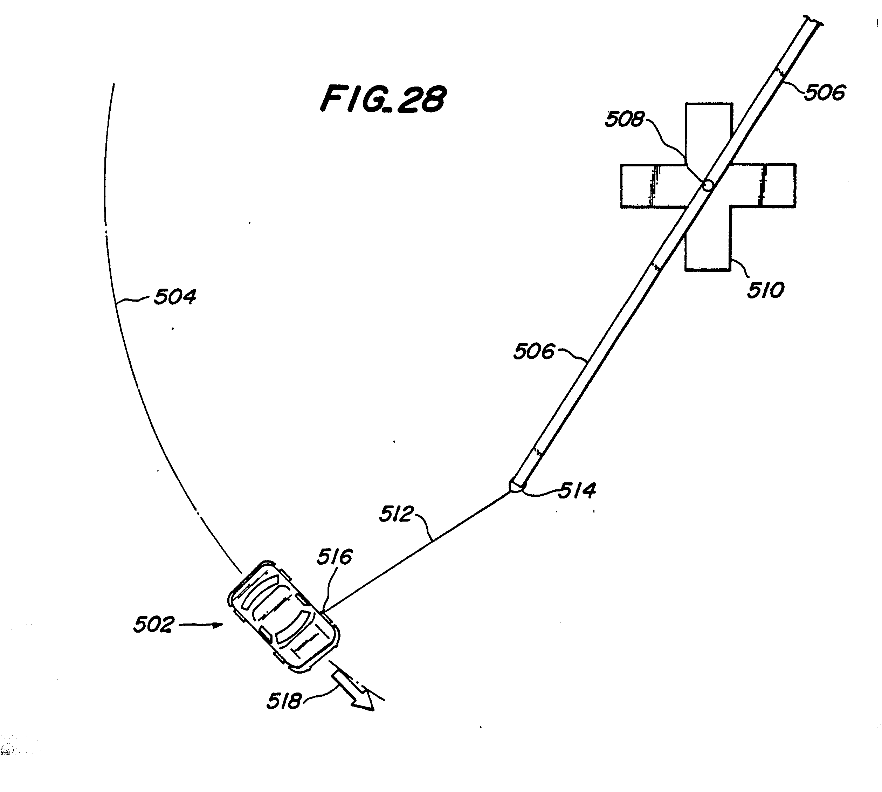

In Figure 28, a four-wheeled automobile 502 is shown being driven along circular path 504. Drive arm 506 is shown mounted on shaft 508 with a second drive arm 506 extending from an opposite side of shaft 508. Shaft 508 is driven by a motor as in Figure 7 and is mounted on stationary base 510.

Flexible hanging line 512 interconnects arm 506 and automobile 502. The hanging line 512 is made of a strong, preferably transparent line, such as fishing line or thin wire. Hanging line 512 is tied to arm 506 at points 514 and connected to the automobile 502 at point 516. An eye hook is secured to the side of the automobile 502 at point 516, ahead of the center of the automobile, spaced approximately one-third of the length of the automobile from the front end of the automobile.

As the vehicle is pulled by the hanging line 512 connected to arm 506, the tendency of the vehicle is to move in the direction of arrow 518. However, due to the connection of the hanging line 512 to the automobile 502 at point 516, the automobile is forced to turn inwardly towards the arm 506, thus travelling over a circular path.

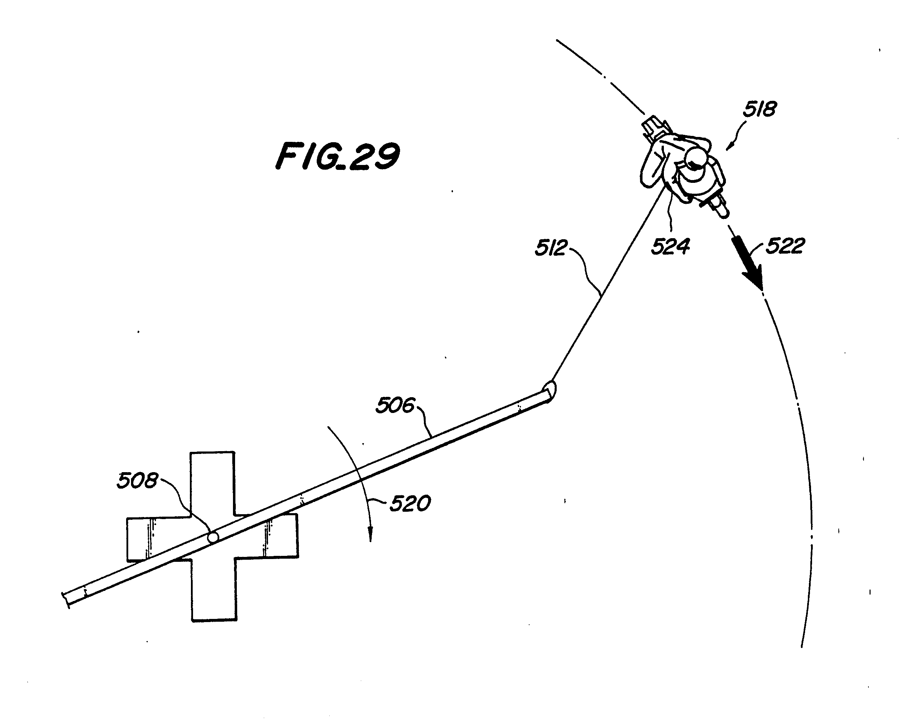

Similarly, in Figure 29, motorcycle 518 is connected by hanging line 512 to support arm 506. The shaft 508 is caused to rotate in the direction of arrow 520 to thereby move the motorcycle 518 in a circular path in the direction of arrow 522. The speed of rotation of the shaft 508 must be sufficient to force the motorcycle to maintain its balance in an upright position. Preferably, the shaft 508 is rotated between 5 to 15 rpm, preferably at approximately 10 rpm.

Hanging line 512 is connected to the motorcycle 518 at point 524 by an eye hook which is mounted on an arm of the motorcycle driver, adjacent the elbow of the driver. The eye hook is located approximately at the mid-point of the motorcycle so that the motorcycle is driven in a balanced state at a slight radially inward incline, to simulate actual motorcycle driving conditions around curves.

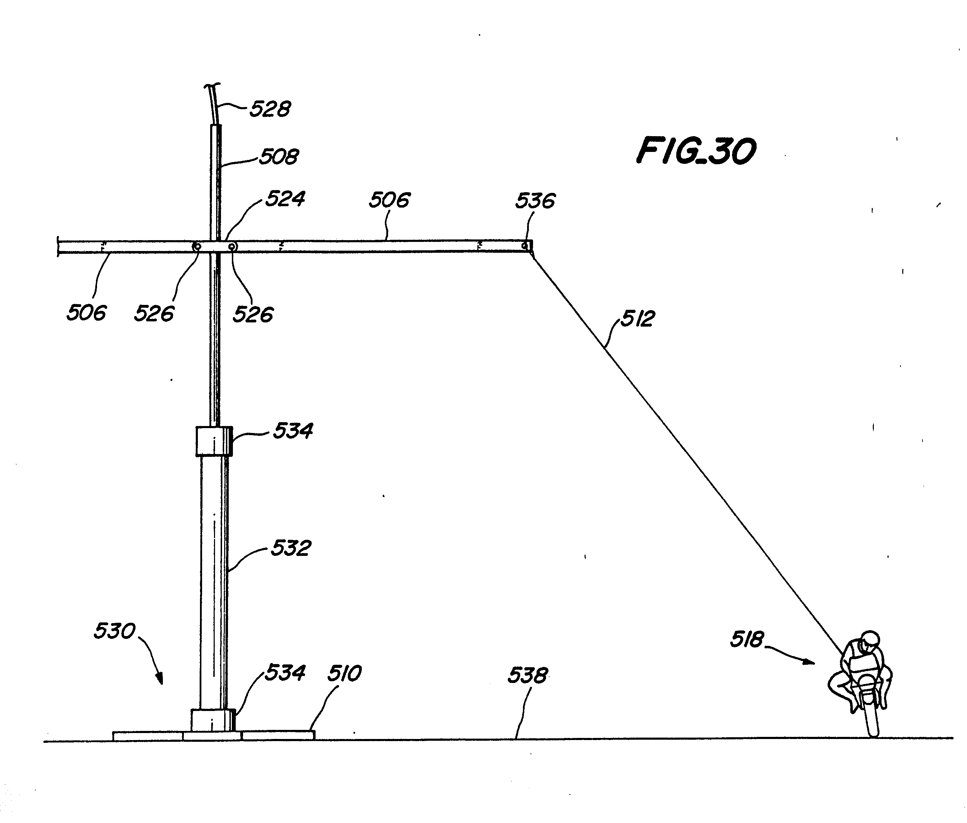

In Figure 30, motorcycle 518 is shown moving along a circular path at a slight radially inwardly incline. Rotating shaft 508 is shown with support arm 506 located on a predetermined point of shaft 508, as held in place by mounting bracket 524. Screws 526 allow for the adjustment of the arms 506 up and down along the length of the shaft in order to vary the diameter of the circle in which the ground travelling model is being driven.

Power source cord 528 is shown passing through hollow shaft 508 into stationary base portion 530 which includes cylinders 534. Cylinders 534 are mounted at opposite ends of cylinder 532. Power source cord 528 passes through hollow shaft 508 from above to avoid the running of the motorcycle over the cord 528 as the motorcycle is driven along the surface of the ground 538. Upper cylinder 534 acts as a bearing for rotation of shaft 508. A motor driving assembly, as described for Figure 7, is mounted in lower cylinder 534 to drive shaft 508.

Hole 536 is shown located at one end of arm 506 to provide a passage for hanging line 512. One end of the hanging line is secured to the support arm 506 at 536.

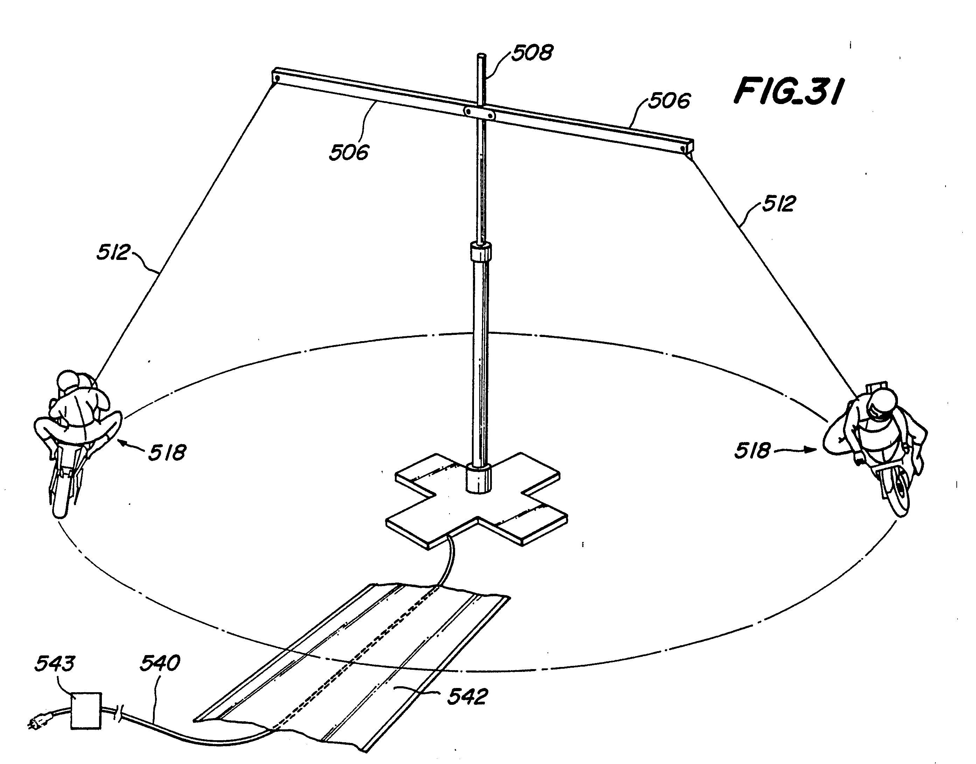

In Figure 31, two motorcycles 518 are shown being driven from opposite ends of support arms 506 as the support arms and shaft 508 are rotated. Electric power source cord 540 is shown extending across the path of travel of the motorcycles. Ramp 542 is placed over the cord 540 so that the motorcycles ride up and over the ramp so that the travel of the motorcycle is not disturbed. It is understood that the ramp 542 may be of a height greater than is necessary to cover the cord. If the ramp is of suffcient height, the motorcycles are caused to fly through the air after being driven up onto ramp 542 and continue on their path of travel upon contacting the ground.

Rheostat 543 is placed in the line of power source cord 540 for control of the voltage to the motor which drives the shaft 508. By this device, the speed of rotation of the shaft and therefore the speed of travel of the model as driven from hanging line 512 is controlled.

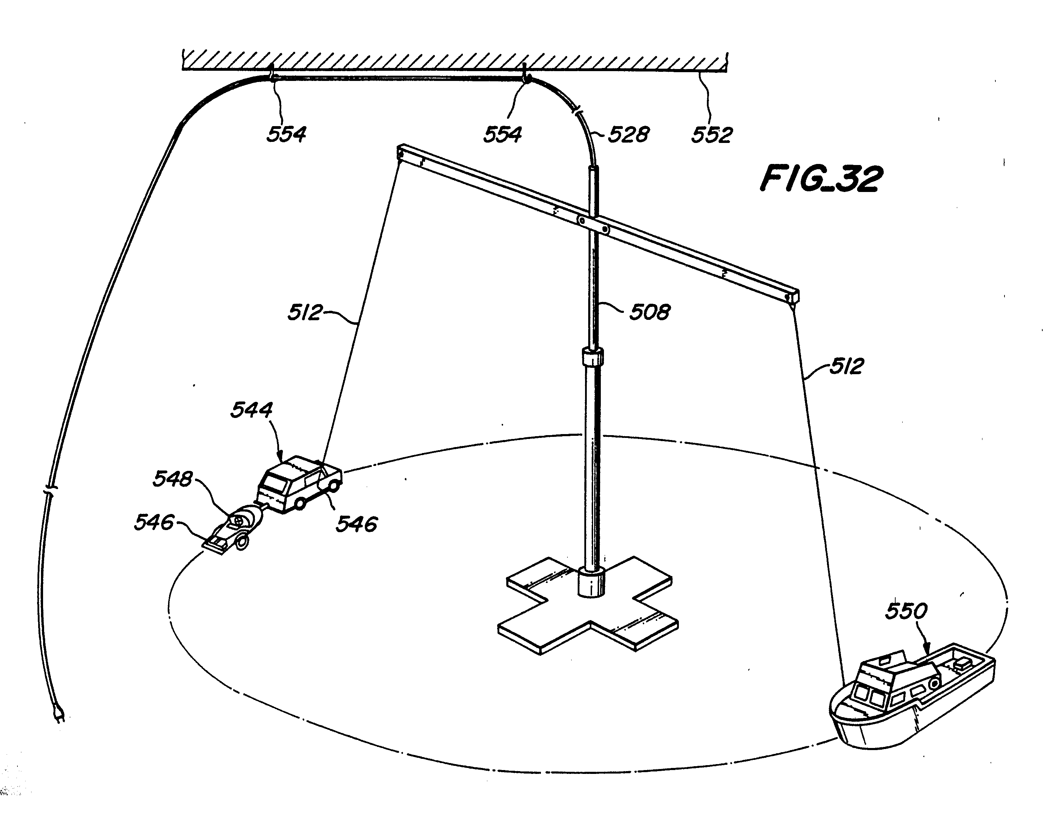

In Figure 32, automobile 544 is shown connected to a trailer 546 for transporting of a speed boat 548. Hanging line 512 is connected to a radially inward side of the automobile 544 at point 546. On an opposite side of the automobile 544 is patrol boat 550.

The power source cord 528 is connected through shaft 508 to a drive mechanism as shown in Figure 30. The cord 528 is mounted on ceiling 552 by screw eye hooks 554.

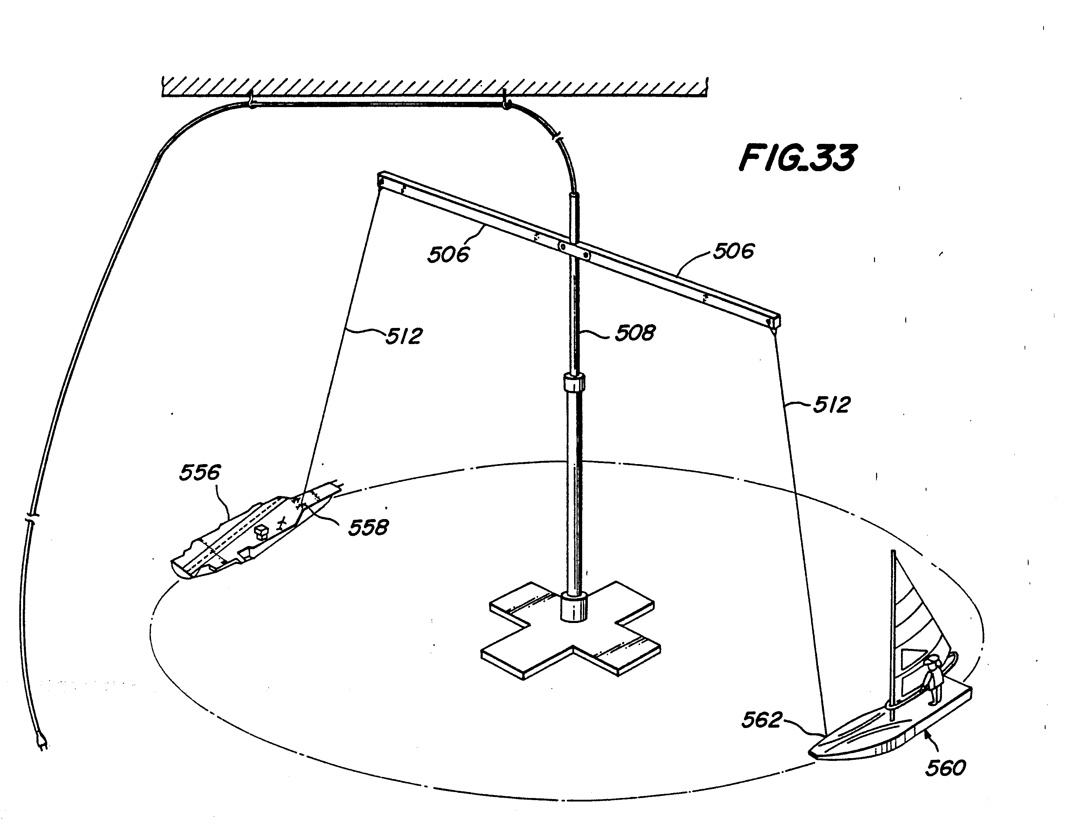

In Figure 33, aircraft carrier 556 is shown mounted to hanging line 512 at a forward end of the aircraft carrier at a point 558. Point 558 is a point located spaced from the front end of the aircraft carrier, approximately one fourth of the length of the aircraft carrier.

On the opposite side of the path of travel of the aircraft carrier 556, sail boat 560 is connected to hanging line 512 at a forward end of the base of the sail boat at point 562. The weight of aircraft carrier 556 versus sail boat 560 in Figure 33 and the weight of automobile 544, trailer 546 and speed boat 548 versus patrol boat 550 in Figure 32, are approximately equal to provide for equal load factors on arms 506 mounted on rotating shaft 508.

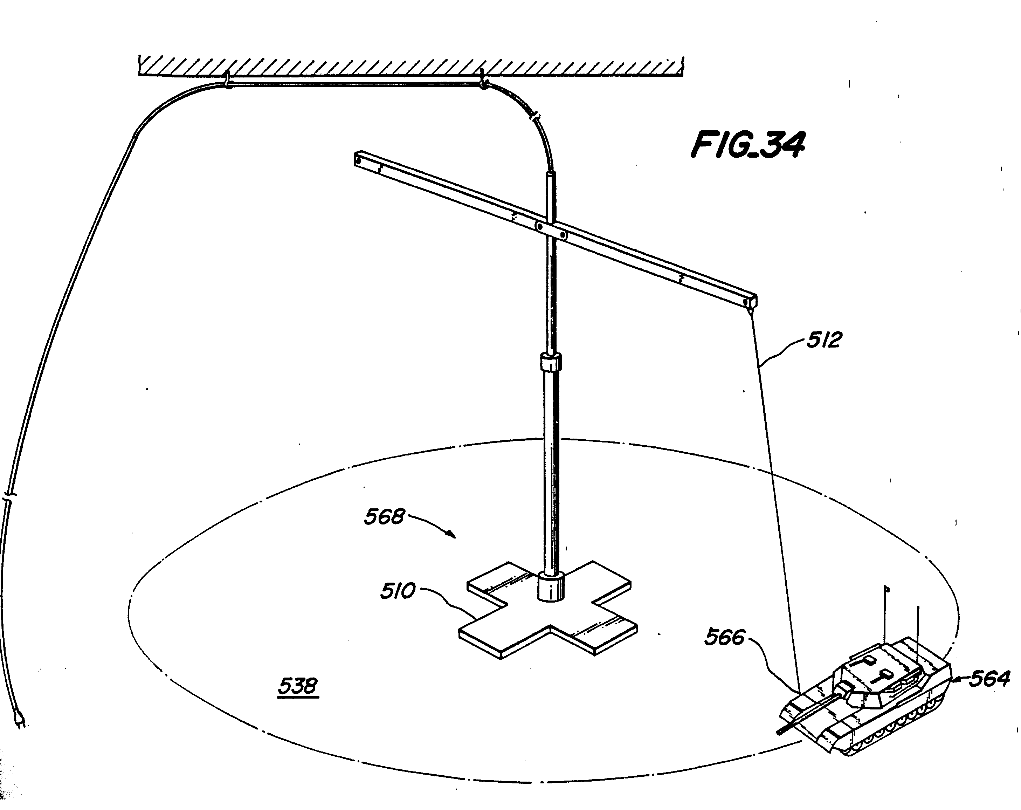

In Figure 34, military tank 564 is shown connected to hanging line 512 at point 566 which is located approximately one fourth of the length of the tank, from the front end of the tank. In each of Figures 31 through 34, stationary base 510 is anchored or of sufficient weight to anchor the drive mechanism 568 on the floor 538 as a model is caused to follow a circular path.

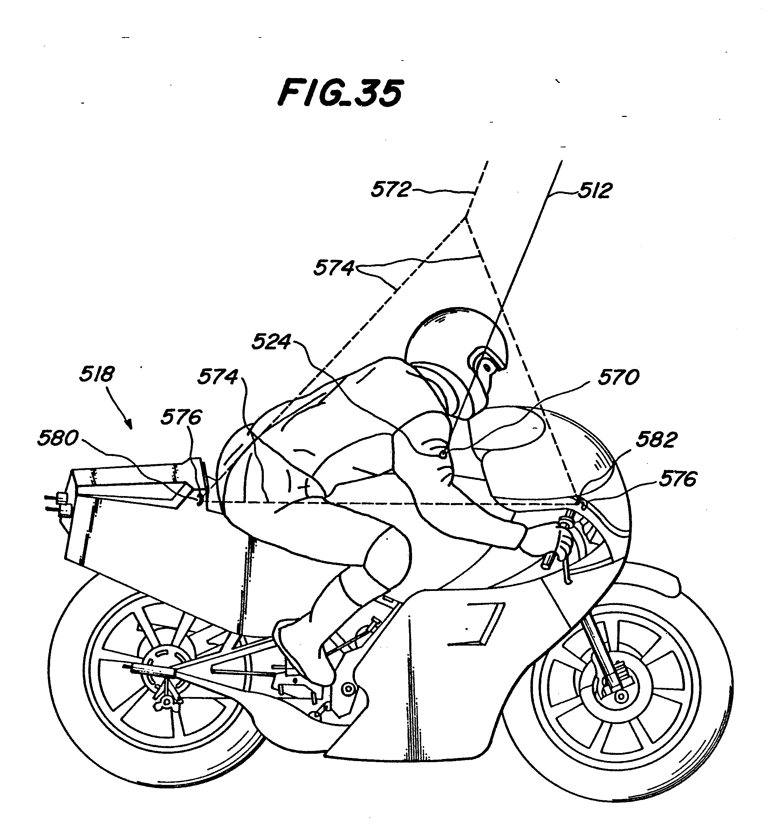

In Figure 35, a more detailed view of the motorcycle 518 is shown. Screw eye hook 570 is shown mounted at anchoring point 524 so that a loop at the end of hanging line 512 is hooked under one end of the screw eye 570 which is spaced from the shoulder of the motorcycle driver and is held in the curved portion of the hook 570 as the motorcycle is driven by the hanging line connected to a support arm.

In an alternate embodiment, hanging line 572 diverges into two lines 574 at a point adjacent to the end of the hanging line 572. Each end of each line 574 is connected to a hook 576 which is mounted on the motorcycle at points 580 and 582. A third portion of hanging line 574 extends between hooks 576.

Alternately, the two portions 574 of hanging line 572 extend from hanging line 572 and the hooks 576, could terminate at the hooks 576 with a loop tied around the hooks 576. Hooks equivalent to hooks 570 and 576 are mounted at the contact point of the hanging line to the tank, aircraft carrier, sail boat, patrol boat, and automobile shown in the other Figures.

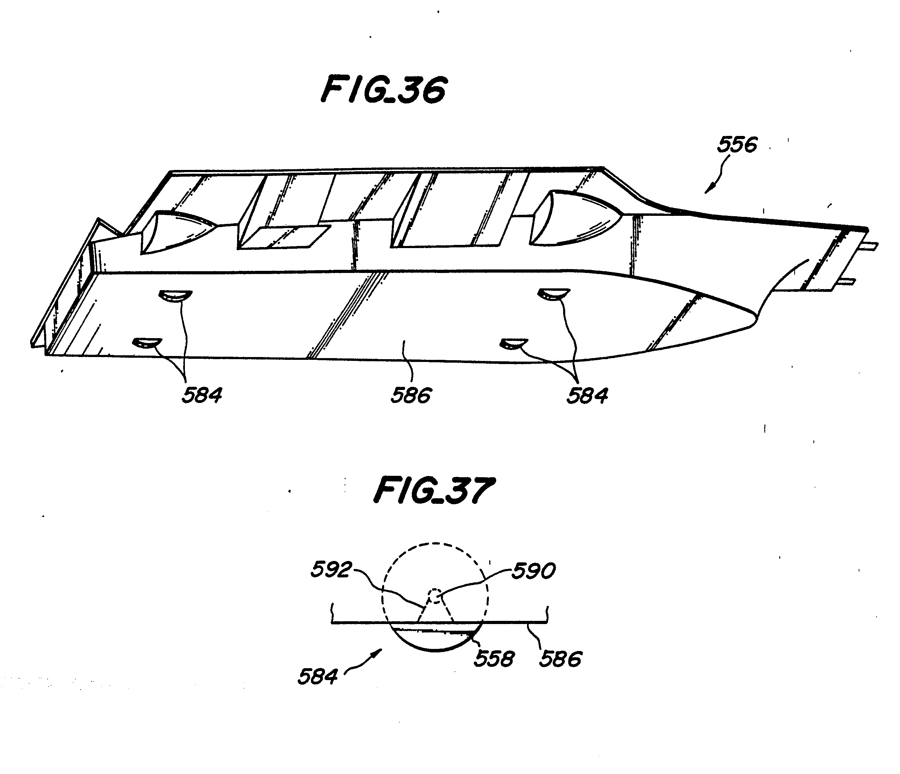

In Figure 36, the underside of aircraft carrier 556 is shown. Wheels 584 project from the bottom 586 of the aircraft carrier 556. Wheels 584 are free spinning and help the aircraft carrier 556 roll across the ground as controlled by hanging line 512.

In Figure 37, an enlarged view of the wheels 584 is shown with exposed portion 588 of the wheel projecting below the surface of the bottom 586 of aircraft carrier 556. The wheel is mounted on axle 590. Axle 590 is supported on mounting struts 592 which project upwardly from the bottom 586 of the aircraft carrier 556.

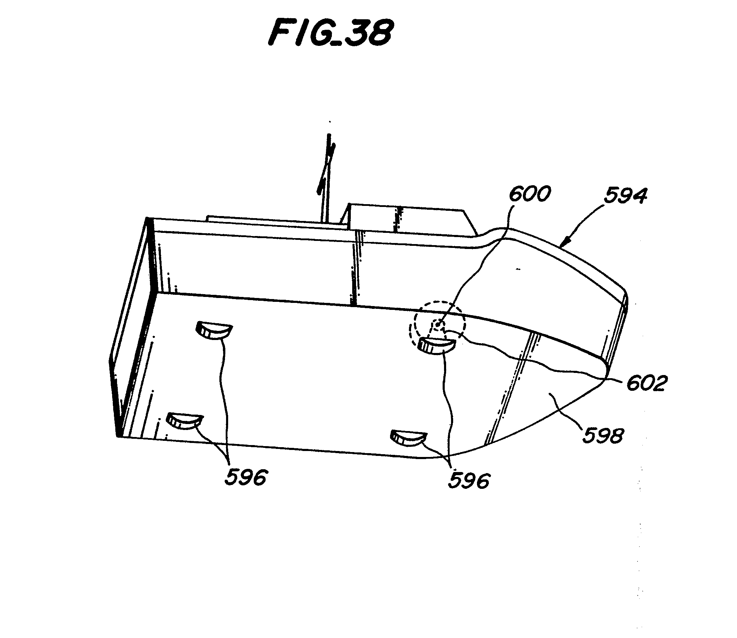

In Figure 38, a patrol boat 594 is shown with four wheels 596 partially projecting from the bottom 598 of the boat 594. As shown in Figure 38, wheel 596 is mounted on axle 600 mounted on brackets 602 which project upwardly from the bottom 598 of the boat 594.

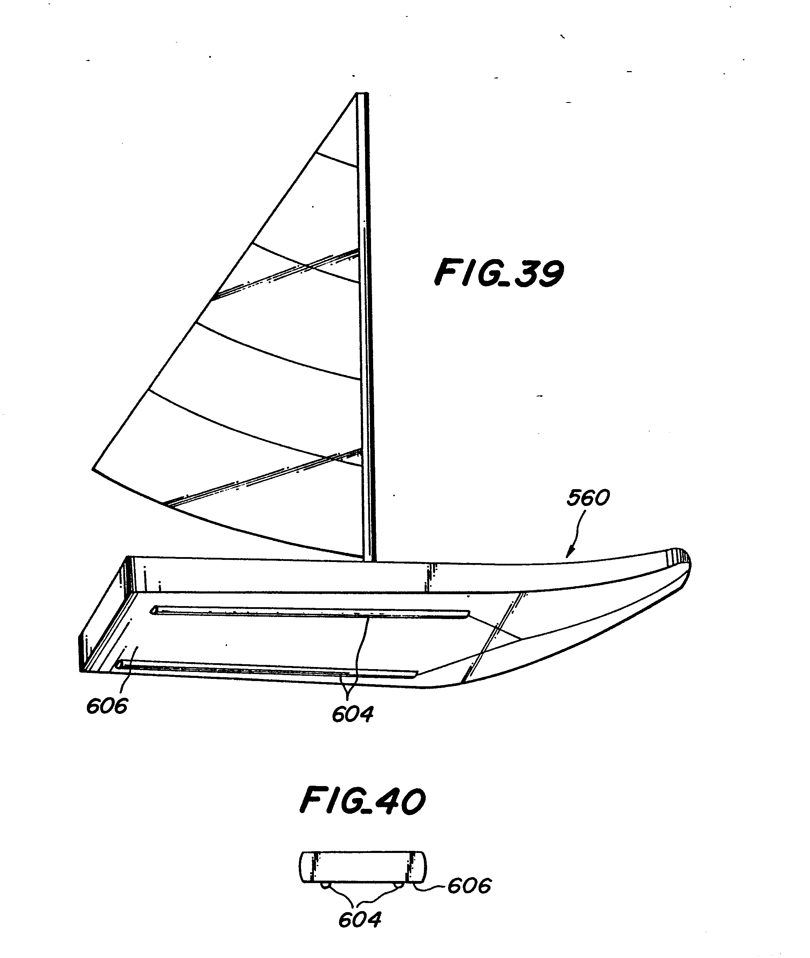

In Figure 39, sail boat 560 is shown with runners 604 extending across the bottom of the boat in a direction parallel to the longitudinal axis of the boat. In Figure 40, runners 604 are shown projecting from the bottom 606 of the boat 560.

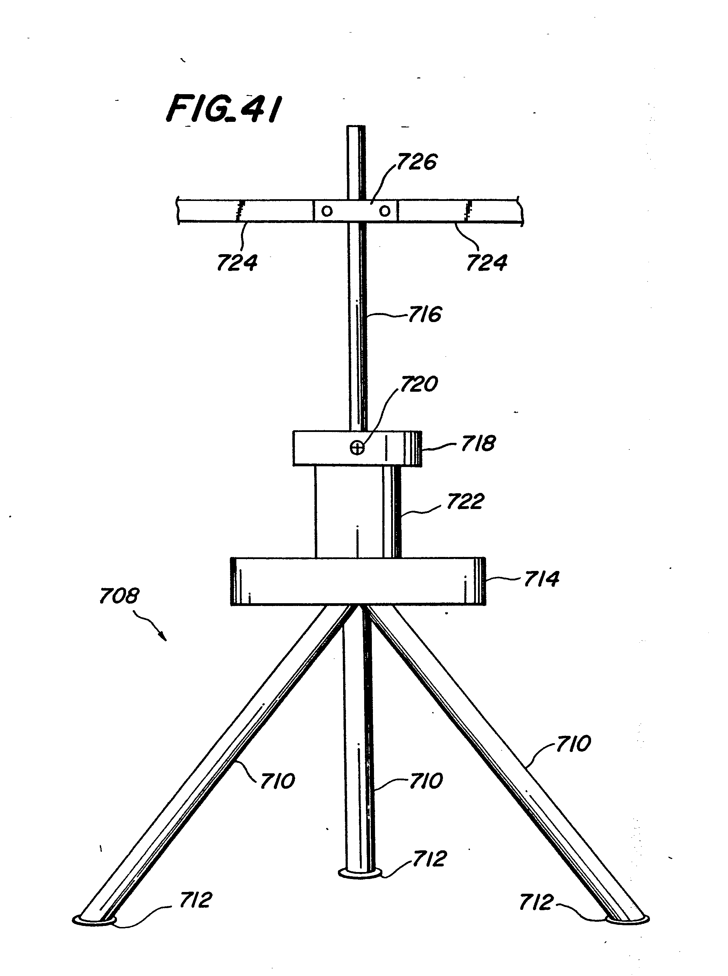

In Figure 41, driving mechanism stand 708 is shown having three legs 710 which include an anti-skid cushion 712 located at the bottom of each leg. The tripod formed by the three legs 710 supports a motor drive unit located within cylindrical block 714. Rotating shaft 716 is mounted within bearing block 718 and is movable in the vertical direction through bearing block 718. Set screw 720 locks shaft 716 in place in bearing block 718. Spacing block 722 provides room for the movement of shaft 716 towards the base of the tripod. Supporting arms 724 are mounted on shaft 716 by mounting bracket 726 which is also adjustable in height along the length of shaft 716. Support arms support a hanging line as is shown in Figures 1 through 7.

The tripod formed from legs 760 provides an alternate form of supporting a drive mechanism for moving a ground travelling model in a circular path. A power source cord may enter through one of legs 710 to the motor drive mechanism 714.

Alternately, the power source cord may pass through hollow rotating shaft 716 from above and be connected to the motor drive mechanism 714. The power source cord passing through the hollow drive rotating shaft 716 is held stationary as the shaft rotates about it. It is understood that other means may be used to anchor the driving external power mechanism at the center of a circle, about which the model of a sea or land travelling vehicle travels.

Having described the invention, many modifications thereto will become apparent to those skilled in the art to which it pertains without deviation from the spirit of the invention as defined by the scope of the appendant claims.

Although the invention as herein shown and described in what is conceived to be the most practical and preferred embodiments, it is recognized that departures may be made therefrom within the scope of the invention, which is not to be limited to the details disclosed herein but is to be accorded the full scope of the claims so as to embrace any and all equivalent devices and apparatus.

Claim:

1.    A propulsion apparatus for flying of an object, said propulsion apparatus comprising:

a base;

a shaft extending from said base;

drive means for rotating said shaft about its longitudinal axis;

an arm connected to said shaft;

at least a hanging line connected at one end to said arm; and

connecting means for connecting said object to the other end of said hanging line.

2.    A propulsion apparatus as claimed in claim 1, wherein said connecting means comprises a member and two cymbal-shape members located at said other end of said hanging line, the narrow end of each of said two cymbal-shape members defining an opening located opposed to each other through which said hanging line is threaded, said member engaging the interior of one of said two cymbal-shape members and the wide end of the other of said two cymbal-shape members engaging said object.

3.    A propulsion apparatus as claimed in claim 1, wherein said arm is pivotably connected at one end to said shaft.

0206601

4.    The combination of a propulsion apparatus and an aerodynamically designed model, said combination comprising:

a base;

a shaft extending from said base;

drive means for rotating said shaft about its longitudinal axis;

an arm connected to said shaft;

at least a hanging line connected at one end to said arm and at the other end connected to said model radially inwardly from its center of lift or at the center of lift for flying said model by the air forces acting on said model when said shaft is rotated by said drive means.

5.    A combination as claimed in claim 4, further comprising a hole defined by said model through which said hanging line is threaded.

6.    A combination as claimed in claim 5, further comprising means for connecting said other end of said hanging line to said model, said means for connecting comprises a member and two cymbal-shape members located at said other end of said hanging line, the narrow end of each of said two cymbal-shape members defining an opening located opposed to each other through which said hanging line is threaded, said member engaging the interior of one of said two cymbal-shape members and the wide end of the other of said two cymbal-shape members engaging said model.

7. A combination as claimed in claim 4, wherein said arm is pivotably connected at one end to said shaft.

8. A combination as claimed in claim 5, wherein said means for connecting is located in the interior of the model and the wide end of the other of said two cymbal-shape members surrounds said hole.

9. A model to be flown by a propulsion apparatus, said model comprising:

a body; and

anti-twisting means for interconnecting said body to a propulsion apparatus, one end of said anti-twisting means being located adjacent to said body radially inwardly from its center of lift or at the center of lift to prevent twisting of said body during flight.

10. A model as claimed in claim 9, wherein said anti-twisting means comprises a hanging line, a blocking member located at one end of said hanging line and two cymbal-shape members mounted on said hanging line, the narrow end of each of said two cymbal-shape members defining an opening, each of said narrow ends being located opposed to each other and said hanging line extending through said openings, said blocking member being dimensioned to prevent the removeal of said two cymbal-shape members from said one end of said hanging line.

- 51 -   0206601

11.   A model as claimed in claim 10, wherein said
two cymbal-shape members are located within said body,
said hanging line extending through said body and the
wide end of one of said cymbal-shape members located
furthest from said blocking member being located adjacent
said body.

12.   The combination of a flying object and an
apparatus for causing the object to fly, said combination
comprising:

a model including a body and two wings, said wings
being pivotably mounted on opposite sides of said body;
and

propulsion means for rotating said model into
flight and to cause the wings to flap.

13.   The combination as claimed in claim 12,
wherein said propulsion means includes at least a
hanging line and a drive means, said hanging line being
connected to said model at least one point at one end
of the hanging line and said hanging line being connected
to said drive means at the other end of the hanging
line.

14.   The combination as claimed in claim 12,
wherein said wings each include a flap located at its
trailing edge for diverting wind forces during flight
to repeatedly force said wings from an elevated position
to a position extending laterally from the body.

- 52 -

0206601

15.    A model plane comprising:

a body;

a propeller;

a propeller shaft, said propeller being rotatably mounted on said propeller shaft, one end of said propeller shaft being fixed to said body and the other end of said propeller shaft being spaced from said body;

at least one conical washer mounted on said propeller shaft, one of said at least one conical washers being secured to said propeller and said one conical washer engaging one of (a) another conical washer held stationary and (b) said other end of the propeller shaft for decreasing the frictional resistance of said propeller to turning due to wind forces engaged by said propeller even when the body is rotated at slow speeds.

16.    The model plane claimed in claim 15, wherein said other conical washer is secured to said body.

17.    The model plane claimed in claim 15, wherein said other conical washer is secured to said other end of said propeller shaft.

0206601

18. A propulsion apparatus for a land travelling model, said propulsion apparatus comprising:

a base;

a shaft extending from said base;

drive means· for rotating said shaft about its longitudinal axis;

an arm connected to said shaft;

at least a hanging line connected to one end to said arm; and

connection means for connecting said model to the other end of said hanging line.

19. The combination of a propulsion apparatus and a model, said combination comprising:

a base;

a shaft extending from said base;

drive means for rotating said shaft about its longitudinal axis;

an arm connected to said shaft;

a model including wheels adapted to be driven on the ground;

at least a hanging line connected at one end to said arm and at the other end connected to said model at a point spaced radially inwardly from a center of gravity or at the center of gravity of said model for transporting said model along a circular path by centrifugal force when said shaft is rotated by said drive means.

20.  The combination as claimed in claim 19, further comprising hooks means attached to said model, said hanging line being secured to said model at said hook means.

21.  The combination as claimed in claim 20, wherein said model is a model of a motorcycle.

22.  The combination as claimed in claim 21, wherein said hook means is mounted on said motorcycle at a point approximately located at a center of gravity of said motorcycle and said point is located on a side of said motorcycle positioned closest to said arm.

23.  The combination as claimed in claim 21, wherein said hook means is mounted on said motorcycle at two spaced apart points, said two points being equidistantly spaced from a center of gravity of said motorcycle and said two points are located on a side of said motorcycle positioned closest to said arm.

24.  The combination as claimed in claim 19, wherein said model is an automobile.

25.  The combination as claimed in claim 19, wherein said model is a boat.

FIG. 1

# FIG.2

FIG_3

FIG_4

FIG.5

# FIG_6

FIG. 7

0206601

## FIG_8

74  64  74  116  118  114  74  62  74

104  102

## FIG_9

74  64  74  112  110  74  62  74

104  102

6/34

## FIG_10

## FIG_11

## FIG_12

# FIG_13

140

4

# FIG_14

144
150
146
152
148

156  136  138

142

144
146
148

# FIG.15

# FIG. 16

FIG. 17

FIG. 18

0206601

FIG.19

0206601

FIG.20

## FIG.21

336

340

330    332    334    338    342    344

## FIG.22

338    340    342

344    346

330

334

16 134

0206601

**FIG. 23**

348 350 352 354 356 353 355

**FIG. 24**

360 362 372 364 366 370 368

17134    0206601

FIG_25

FIG_26

FIG_27

0206601

# FIG.25A

# FIG.25B

0206601

**FIG.26B**

**FIG.26A**

# FIG.27A

# FIG.27B

FIG_27C

FIG.28

# FIG.29

508

506

520

512

524

518

522

FIG.30

FIG.31

508

506

506

512

512

518

518

543 540

542

FIG_32

FIG.33

FIG. 34

512

568

510

538

566

564

FIG.35

# FIG.36

556

584    586    584

# FIG.37

592    590

584    558    586

0206601

# FIG.38

0206601

FIG.39

560

606

604

FIG.40

606

604

34/34

0206601

# FIG.41

# EUROPEAN SEARCH REPORT

**European Patent Office**

Application number

EP 86 30 4334

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-1 722 922 (J. JOHNSON) <br><br> * Page 1, lines 1-10,13,14,56,83; page 2, lines 35-45; figures * | 1,4,12 ,18 | G 09 B 23/10 <br> A 63 H 27/04 |
| A | | 3,5,7, 14,15, 19 | |
| | --- | | |
| Y | BE-A- 468 076 (M. MEYER) <br> * Pages 3,4; claims 1-6; figure 1 * | 1,4,12 | |
| A | | 13,15 | |
| | --- | | |
| Y | DE-A-3 203 247 (K. POENSGEN) <br> * Page 1, claims; figure 1 * | 12 | **TECHNICAL FIELDS SEARCHED (Int. Cl.4)** |
| | --- | | G 09 B |
| Y | GB-A-1 021 568 (R. BILLAT) <br> * Page 1, lines 1-35; figures 1,2 * | 18 | G 09 F <br> A 63 H |
| A | | 21,24 | |
| | ---      -/- | | |

The present search report has been drawn up for all claims

| Place of search | Date of completion of the search | Examiner |
|---|---|---|
| THE HAGUE | 05-08-1986 | ODGERS M.L. |

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 492 487 (A. MANNKOPFF) <br><br> * Page 1, lines 1-9,55-62; figures 1-4 * <br><br> ----- | 2,5,6, 8,10, 18,21, 24,25 | |

TECHNICAL FIELDS SEARCHED (Int. Cl.4)

The present search report has been drawn up for all claims

| Place of search | Date of completion of the search | Examiner |
|---|---|---|
| THE HAGUE | 05-08-1986 | ODGERS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82